# EUROPEAN PATENT SPECIFICATION

(11) **EP 1 901 541 B1**
(45) Date of publication and mention of the grant of the patent: **15.07.2009**
(21) Application number: 07253263.3
(22) Date of filing: 20.08.2007
(51) Int. Cl.: H04N 1/00, H04N 1/32, H04N 5/232, H04N 101/00

(54) **Timing generation device for driving image pickup device, imaging apparatus, and method for starting imaging apparatus**
Zeitgenerierungssvorrichtung zur Ansteuerung eines Bildaufnahmevorrichtung, Bildgebungsvorrichtung und Verfahren zum Starten einer Bildgebungsvorrichtung
Dispositif de génération de synchronisation pour entraîner un dispositif de capture d'image, appareil d'imagerie, et procédé pour démarrer l'appareil d'imagerie

(30) Priority: 21.08.2006 JP 2006224784
(43) Date of publication of application: 19.03.2008
(73) Proprietor: Ricoh Company, Ltd., Tokyo 143-8555 (JP)
(72) Inventor: Shiraishi, Kenji, Ohta-ku Tokyo 143-8555 (JP)
(74) Representative: Leeming, John Gerard

(56) References cited:
- EP-A1- 0 565 335
- EP-A2- 1 134 971
- WO-A-03/088653
- US-A1- 2001 050 713
- US-A1- 2004 095 497
- US-A1- 2004 165 103

## Description

### BACKGROUND OF THE INVENTION

### Field of the Invention

The present invention relates to a timing generation device or timing generator to drive an image pickup device such as a solid-state image sensing device. The timing generation device is programmably controlled by a microcomputer or the like. The present invention further relates to a high-speed start of, in particular, an imaging apparatus having the timing generation device, and a method for starting the imaging apparatus.

### Description of the Related Art

As high-quality image technologies in a digital still camera, a video camera or the like having an image pickup device, such as a solid-state image sensing device, for example, a CCD (charge-coupled device), have developed, the number of pixels has increased and high performance technical advantages of the image pickup device has been enhanced.

Conventionally, a timing generator which outputs a driving timing signal to drive an image pickup device has been developed so as to correspond to each model of the image pickup device. If a new image pickup device is developed, a corresponding timing generator is required to be developed at the same time. Therefore there are problems in that the development time is increased or types of parts specified for each image pickup device are increased and processes for the production are inefficient and uneconomic.

In order to resolve these problems, a timing generator in which a timing signal to drive the image pickup device is enabled to be programmed has been developed as described in Japanese Patent Laid-Open Publication Number Hei10-257398 and Japan Patent Number 3703379.

That is to say, Japanese Patent Laid-Open Publication Number Hei10-257398 discloses a programmable timing generator that enables driving of various types of solid-state image sensing devices in which generating patterns of a timing signal are set by a microcomputer or the like.

Japan Patent Number 3703379 discloses a technique to reduce a memory size which enables storing of timing signal patterns in the programmable timing generator shown in Japanese Patent Laid-Open Publication Number Hei10-257398.

Moreover, in an imaging apparatus such as a digital still camera, it is required that photographing be immediately available when a user wants, and a reduction of the starting time is required. In order to reduce the starting time, Japanese Patent Laid-Open Publication Number 2004-70176 discloses a technique in which an initializing operation of a lens barrel mechanism, that is to say, an initializing operation of an optical system and a system initializing operation are performed in parallel to each other so that a reduction of the starting time can be achieved.

As mentioned above, the timing generator is configured to be programmable so that the timing generator is not required to be specified to each type of image sensing device. However, timing data to drive the mounted solid-state image sensing device are required to be loaded upon starting of the camera or the timing generator. Therefore, starting of the programmable timing generator takes longer than that of a conventional timing generator due to the time required to load the timing data to the programmable timing generator.

US 2004/0095497 discloses a timing generator for an electronic image sensor including one or more memory based tables for controlling timing events that occur within one or more different types of image sensor lines, and one or more memory based tables for controlling timing events that occur within one or more different types of image sensor frames. The memories could be volatile memories that lose their contents when power is turned off and which must be programmed with the line and frame entries when power is restored. The memories could be non-volatile memories that retain their contents even when power is turned off.

EP 1 134 971 discloses a timing signal generating device to drive a solid-state image pickup device including at least one rewritable memory in which stored information can be rewritten by an external controller. In one embodiment, the timing signal generating device includes a first memory and a second memory. The first memory or the second memory may be implemented by a nonvolatile memory.

An object of the present invention is to provide a timing generation device which is programmable to drive an image pickup device and outputs a driving timing signal so that a loading process of program data when the timing generation device is started is not required or is reduced. A further object of the present invention is to provide an imaging apparatus, a method for starting an imaging apparatus, and a method for protecting an image pickup device.

In particular, the above object of the present invention is to provide an imaging apparatus in which a timing generation device is started with program data preliminarily stored in the timing generation device so that the timing generation device can be started without waiting until loading the program data is completed.

To achieve the above object, according to an aspect of the present invention, there is provided a timing generation device to drive an image pickup device, comprising:
a rewritable nonvolatile memory in which at least one first program datum is preliminarily stored; and
a rewritable volatile memory in which at least one second program datum is stored,
wherein the timing generation device is configured to output a first driving timing signal based on the at least one first program datum preliminarily stored in the nonvolatile memory, but not based on the at least one second program datum, to drive the image pickup device;
wherein timing generation device is configured to output a second driving timing signal based on the at least one second program datum stored in the volatile memory, but not based on the at least one first program datum, to drive the image pickup device; and
wherein the timing generation device is configured to switch a driving mode of the image pickup device and output either the first or second driving timing signal based on the switched driving mode of the image pickup device.

According to a further aspect of the present invention, there is provided a method for starting an imaging apparatus having an image pickup device and a timing generation device including a rewritable nonvolatile memory and a rewritable volatile memory, having the steps of:
storing at least one first program datum in the nonvolatile memory;
receiving a staring signal of the imaging apparatus; and
outputting a first driving timing signal based on the at least one first program datum stored in the nonvolatile memory to drive the image pickup device;
writing at least one second program datum in the volatile memory while the timing generation device outputs the first driving timing signal based on the at least one first program datum stored in the nonvolatile memory;
switching a driving mode of the image pickup device; and
outputting either a driving timing signal based on the at least one first program datum, but not based on the at least one second program datum, or a second driving timing signal based on the at least one second program datum, but not based on the at least one first program datum, based on the switched driving mode of the image pickup device.

FIG. 1 is a block diagram showing a system configuration of a digital camera as an imaging apparatus according to an embodiment of the present invention.
FIG.2 is a front view showing an appearance of the digital camera of FIG.1.
FIG.3 is a back view showing an appearance of the digital camera of FIG.1.
FIG.4 is a plan view showing an appearance of the digital camera of FIG. 1.
FIG. 5 is a flowchart illustrating a process for rewriting a nonvolatile memory of a timing generator from a memory card in the digital camera of FIG. 1.
FIG.6 is a view schematically showing a screen when the process shown in FIG. 5 for rewriting the nonvolatile memory from the memory card is performed.
FIG.7 is a view schematically showing a confirmation screen when a process for rewriting a nonvolatile memory from an external device such as a PC is performed.
FIG.8 is a timing chart illustrating a high-speed starting operation according to an embodiment in the digital camera of FIG. 1.
FIG.9 is a block diagram showing an example of a substrate configuration in the digital camera system of FTG.1.
FIG.10 is a block diagram showing a system configuration of a digital camera as an imaging apparatus according to a second embodiment of the present invention.
FIG.11 is a timing chart illustrating a high-speed starting operation according to an embodiment of the present invention in the digital camera of FIG. 10.
FIG.12 is a block diagram showing a system configuration of a digital camera as an imaging apparatus according to a third embodiment of the present invention.
FIG.13 is a timing chart illustrating a high-speed starting operation according to an embodiment of the present invention in the digital camera of FIG.12.
FIG. 14 is a view schematically illustrating pixel summation interlace transfer reading out by pixel summation 1/4 line reading out and pixel summation 1/2 line reading out.
FIG.15 is a view schematically illustrating an all-pixel field transfer reading by frame reading of first to fourth fields
FIG. 16 is a view schematically illustrating a reading range for a high-speed AF control.
FIG.17 is a view schematically illustrating an accumulation area of area divided RGB data in an image screen.
FIG.18 is a timing chart illustrating a starting operation in a conventional digital camera.

### DETAILED DESCRIPTION OF THE PREFERRED EMBODIMENTS

Preferred embodiments of a timing generation device for an image pickup device, an imaging apparatus, and a method for starting an imaging apparatus, according to the present invention will be explained in detail with reference to the accompanying drawings below.

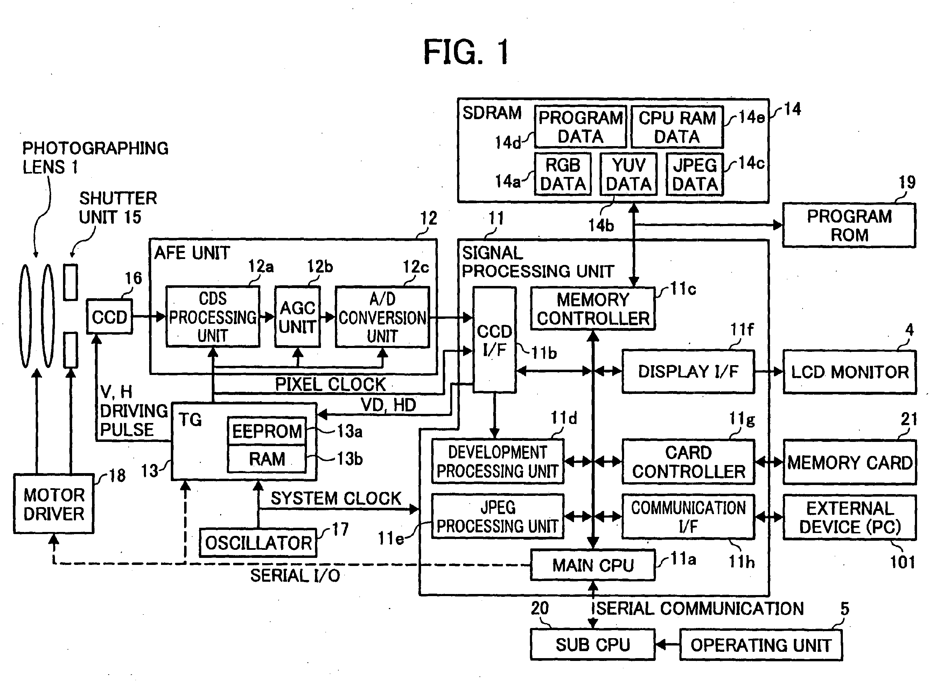

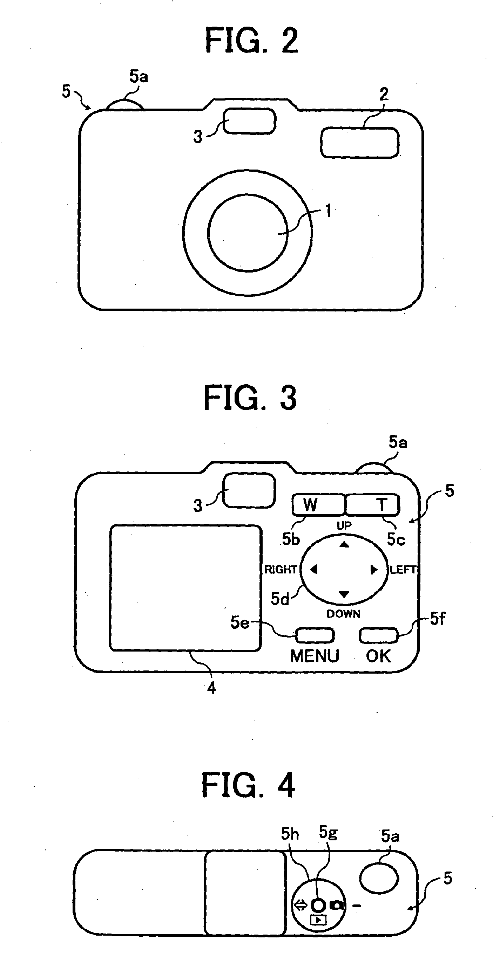

FIGS.1 to 4 show a structure of a digital camera as an imaging apparatus having a timing generator according to a first embodiment of the present invention. FIG.1 is a block diagram schematically illustrating a system configuration of the digital camera according to this embodiment. FIGS.2 to 4 show appearances of the digital camera, wherein FIG.2 is a front view of the appearance of the digital camera, FIG.3 is a back view of the digital camera, and FIG.4 is a top view of the digital camera.

As shown in FIGS.2 to 4, the digital camera has a camera body provided with a photographing lens 1, a strobe light-emitting portion such as an electronic flash 2, an optical finder 3, a liquid-crystal display (LCD) monitor 4 and an operating unit 5. The operating unit includes a release button 5a, a W (wide-angle) zoom button 5b, a T (telephoto) zoom button 5c, a direction button 5d, a menu button 5e, an OK button 5f, a power button 5g, a mode dial 5h and the like.

The release button 5a, the power button 5g and the mode dial 5h are provided on an upper surface of the camera body. The release button 5a is pressed down when photographing. In common cases, the release button 5a has two step operations, that is to say, for example, an auto-focus operation is performed when the release button 5a is half-pressed in a first step operation and a photographing operation is performed when the release button 5a is fully-pressed in a second step operation. The power button 5g is disposed on a center portion of the mode dial 5h, and is turned on and off every time it is pressed down. The mode dial 5h is turned to select an operating mode of the camera. The mode dial 5h is configured to select the driving mode of the image pickup device.

The photographing lens 1 and the strobe light-emitting portion 2 are provided on a front surface of the camera body. The optical finder 3 is provided such that an object_surface of the optical finder 3 is provided on the front surface of the camera body. The photographing lens 1 is provided such that an object surface of the photographing lens is disposed so as to be directed to a front side of the camera body.

The LCD monitor 4, the W zoom button 5b, the T zoom button 5c, the direction button 5d, the menu button 5e and the OK button 5f are provided on a back surface of the camera body.

An eyepiece surface of the optical finder 3 is provided on the front surface of the camera body. The LCD monitor 4 is used to display various operation setting screens and a screen in which a photographic subject in an electronic finder is monitored, and reproduce photographed images, and the like. When the W zoom button 5b of the operating unit 5 is pressed down, the photographing lens 1 is driven to zoom in for a wide-angle photographing with a short focal length, and when the T zoom button 5c is pressed down, the photographing lens 1 is driven to zoom out for a telephoto photographing with a long focal length. The direction button 5d is used for selecting operations when an operation setting screen or a plurality of photographed images is displayed on the LCD monitor 4. The direction button 5d has an outer peripheral portion which has a substantially circular form and has top, bottom, left and right portions as shown by UP, DOWN, LEFT and RIGHT in FIG.3, respectively. An image is selected or a pointing cursor is moved in upward, downward, left and right directions by pressing down the top, bottom, left and right portions of the direction button 5d, respectively. The menu button 5e is pressed to display a menu screen on the LCD monitor 4, and the OK button 5f is pressed down to decide a selection of a subject pointed by the cursor or the selected image.

As mentioned above, main parts of the optical finder 3 are housed in the camera body, the eyepiece surface of the optical finder 3 is disposed on the back surface of the camera body and the object surface of the optical finder 3 is disposed on the front surface of the camera body. Side surfaces of the camera body are provided with a loading portion of a memory card 21 (mentioned below), or the like, although it is not clearly shown in the drawings. Since general operations of these structures of the digital camera are well known, a detailed explanation will be omitted.

A digital camera system of the digital camera will be described with reference to FIG.1. The digital camera system shown in FTG.1 includes an image pickup device, for example a solid-state image sensing device 16, a timing generator (TG) 13 to drive the pickup device 16, and a signal processing unit 11. The digital camera system further includes the photographing lens 1, the LCD monitor 4, and the operating unit 5 shown in FIGS.2 to 3. The digital camera system includes also, for example, an AFE (analog front end) unit 12, an SDRAM (synchronous dynamic random access memory) 14, a mechanical shutter unit 15, an oscillator 17, a motor driver 18, a program ROM (read only memory) 19, a sub-CPU (central processing unit) 20, and the memory card 21. The signal processing unit 11 has a main CPU 11a, an image pickup device interface (I/F) 11b, a memory controller 11c, a development processing unit 11d, a JPEG processing unit 11e, a display interface 11f, a card controller 11g, and a communication interface 11h. The AEF unit 12 has a CDS (correlated double sampling) processing unit 12a, an AGC (automatic gain control) unit 12b, and an AID (analog-digital) conversion unit 12c. The timing generator 13 has a nonvolatile memory 13a such as an EEPROM (electrically erasable programmable read-only memory). The timing generator also has a volatile memory 13b such as a RAM. The SDRAM 14 is used as an image storing unit which stores frame memories such as RGB data 14a, YUV data 14b, and JPEG data 14c. The SDRAM 14 also stores other data such as program data 14d, RAM data 14e for the CPU, and the like.

The photographing lens 1 has a lens unit including zoom lenses, focus lenses, and the like which are driven by the motor driver 18. The mechanical shutter unit 15 provided in the photographing lens 1 is also driven by the motor driver 18. The mechanical shutter unit 15 has a mechanical aperture function and a mechanical shutter function which are controlled to be driven via the motor driver 18. The motor driver 18 is controlled by the main CPU 11a of the signal processing unit 11 formed by an IC (integrated circuit) signal processing circuit and the like. The main CPU 11a is formed with, for example, a microprocessor.

A photographing unit of the digital camera is formed by the image sensing device 16 formed with a CCD image sensor, the timing generator 13 as a timing generation device generating a signal to drive the image sensing device 16, and the AFE unit 12. The AFE unit 12 has, as described above, the CDS processing unit 12a for obtaining an image signal by performing a correlated double sampling of an output from the image sensing device 16, the AGC unit 12b automatically controlling a gain of an output from the CDS processing unit 12a to adjust a level of the image signal, and the A/D conversion unit 12c converting the analog image signal output from the AGC unit 12b into digital data.

The oscillator 17 provides a system clock to the signal processing unit 11 including the CPU 11a and provides the clock to the timing generator 13. The timing generator 13 receives the clock from the oscillator 17, and outputs a pixel clock for a synchronization of pixels to the image pickup device interface 11b of the signal processing unit 11 and the CDS processing unit 12a, the AGC unit 12b and the A/D conversion unit 12c of the AFE unit 12. The timing generator 13 also outputs driving signals to drive the image sensing device 16 and the AFE unit 12 thereto, respectively. The driving signals are driving timing signals generated based on program data written in at least one of the nonvolatile memory 13a and the volatile memory 13b of the timing generator 13. Outputs of the driving signal to the image sensing device 16 are formed by, for example, a vertical (V) driving pulse and a horizontal (H) driving pulse.

The digital image data input from the image sensing device 16 of the photographing unit to the signal processing unit 11 via the AFE unit 12 is temporarily stored as the RGB data 14a in the SDRAM 14 used as the image storing unit to store frame memories via the image pickup device interface 11b.

The development processing unit 11d is configured to carry out an image development, a filter processing, a pixel skipping processing, a resizing processing, an audio codec, and the like. The image pickup device interface 11b of the signal processing unit 11 outputs a horizontal synchronizing signal (HD) and a vertical synchronizing signal (VD) of a screen to the timing generator 13 and loads the digital RGB signals input from the A/D conversion unit 12c of the AFE unit 12 so as to synchronize the RGB signals with these synchronizing signals. The image pickup device interface 11b then writes the RGB data 14a on the SDRAM 14 via the memory controller 11c.

The development processing unit 11d is configured to convert the RGB data 14a temporarily stored in the SDRAM 14 into YUV data based on image development-processing parameters set by the main CPU 11a. The YUV data is formed by Y data corresponding to luminance data (Y), U data corresponding to color difference data (Cb) of B (blue) - Y, and V data corresponding to color difference data (Cr) of R (red) -Y. The YUV data are rewritten on the SDRAM 14.

The display interface 11f sends display data written on the SDRAM 14 to the LCD monitor 4 used as a display device to display the display data on the LCD monitor 4. The display data may be output to the exterior as TV video signals to be displayed on a TV monitor such as a TV receiver. The display data include YUV data formed by Y, Cb, Cr of a natural image and OSD (on-screen display) data for displaying a photographing mode icon and the like. The memory controller 11c loads the display data stored in the SDRAM 14 and sends them to the display interface 11f. Then the display interface 11f combines the display data to output them as video data.

The JPEG processing unit 11e is a JPEG codec which performs compression of the YUV data of Y, Cb, Cr written on the SDRAM 14 and outputs the data encoded by a JPEG method to the SDRAM 14 in a recording operation. The JPEG processing unit 11e performs an extension of the JPEG encoded data loaded from the SDRAM 14 and outputs the YUV data of Y, Cb, Cr to the SDRAM 14 in a reproducing operation.

The card controller 11g controls loading /writing of data in the memory card 21, more particularly, the CPU 11a controls the card controller 11g to load the data in the memory card 21 to the SDRAM 14, transfer the data stored in the SDRAM 14 to the memory card 21 and write them in the memory card 21. The memory card 21 is, for example, an SD memory card, a multimedia card, a Compact Flashy®, an xD-picture card, a smart-media card, a memory stick, or the like. The memory card 21 is mounted detachably on the camera body. Commonly, the memory card 21 used in the digital camera is one or several types of various memory cards.

The main CPU 11a for controlling operations of the full digital camera loads the program data and control data stored in the program ROM 19 to the SDRAM 14 when the digital camera is started and controls the operations of the full digital camera system based on the program code. The main CPU 11a performs a photographing operation control, settings of the development processing parameters of the development processing unit 11d, loading/writing controls of memories, display controls, and the like according to input commands by the buttons of the operating unit 5, external operational commands by a remote controller (not shown), or communication operational commands by communications from an external device 101 such as external terminals such as a PC (personal computer), and the like connected via the communication interface 11h.

The operating unit 5 is for users to instruct operations of the digital camera, more particularly, the operating unit 5 has the release button 5a to instruct a photographing, the zoom button 5b, 5c to set a magnification of an optical zoom and an electronic zoom, the power button 5g to instruct on/off of a power, the mode dial 5h to select the operating mode such as photographing/reproducing or the like, and the direction buttons 5d, the menu button 5e, and the OK button 5f to set various settings such as a selection of exposure modes from outside, and the like. The operations of the operating unit 5 are monitored by the main CPU 11a, for example, by controlling the sub CPU 20 via a serial communication, and operational states of the operating unit 5 are communicated to the main CPU 11a via the serial communication. That is to say, the sub CPU 20 controls sub systems performing the operations of the operating unit 5, and the main CPU 11a controls the main system performing the operations of the full camera.

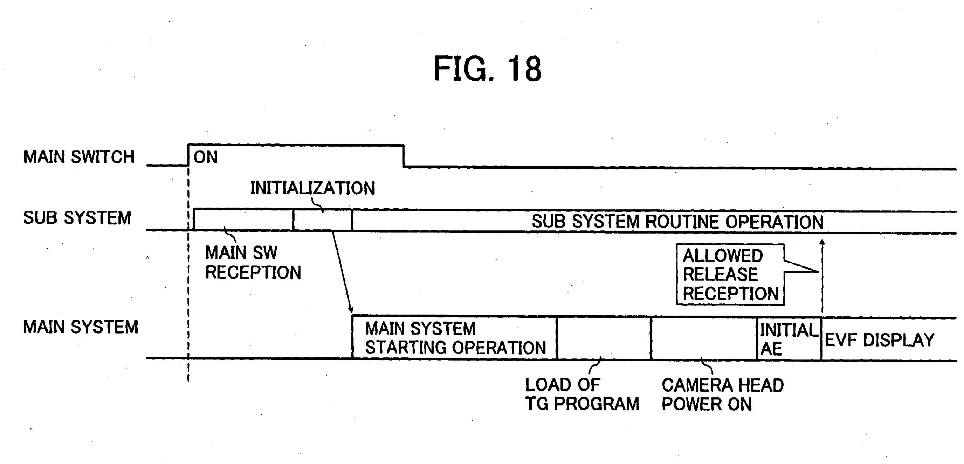

Starting operations will be described below. Conventional starting operations will be described prior to explanations of starting operations according to an embodiment of the present invention with reference to a timing chart in FIG.18. Each unit of the camera system refers to the structures shown in FIGS.1 to 4 illustrating the embodiment of the present invention.

If the mode dial 5h for switching the photographing/reproducing mode is set to the photographing mode and the power button 5g as a main switch is operated to input a request for a start of the camera, the sub CPU 20 receives the signal of the request and activates each power of the signal processing unit 11 including the main CPU 11a to control the camera, the timing generator 13, and the other units, as an initialization operation. However, the powers of the image sensing device 16 and the AFE unit 12 are not activated during the initialization operation because the image sensing device 16 and the AFE unit 12 may be in an abnormal state or inoperative state or the sensing device may be broken if the power of the image sensing device 16 or the AFE unit 12 is activated before signals from the timing generator 13 are input to the image sensing device 16.

The main CPU 11a is used for controlling the operations of the full camera as the main system loads a main program from the program ROM 19 to the SDRAM 14. After the loading of the main program is completed, the main CPU 11a performs a preparing operation of the photographing lens 1, and simultaneously allows the timing generator to load the program data from the program ROM.

As described above, in the early developed digital camera, an individual timing generator is required to be developed so as to adapted to each model of a solid-state image sensing device such as a CCD. After that, a number of models of the image sensing device were developed but it was found that they were not efficient at developing timing generators for each model of the image sensing devices. As a result, timing generators having a rewritable memory, in which program data of a timing of a driving signal are loaded to the memory of the timing generation device during the starting operations, were developed.

When the load of the program data to the timing generator 13 is completed, the CPU 11a inputs powers to a so-called camera head, that is to say, the image sensing device 16 and the AFE unit 12, and allows the timing generator 13 to output the driving signal to start the image sensing device 16 and the AFE unit 12. After the image sensing device 16 and the AFE unit 12 are started and outputs of the timing generation device 16 are stabilized, a photometry for an automatic exposure (AE) is performed in the starting operations.

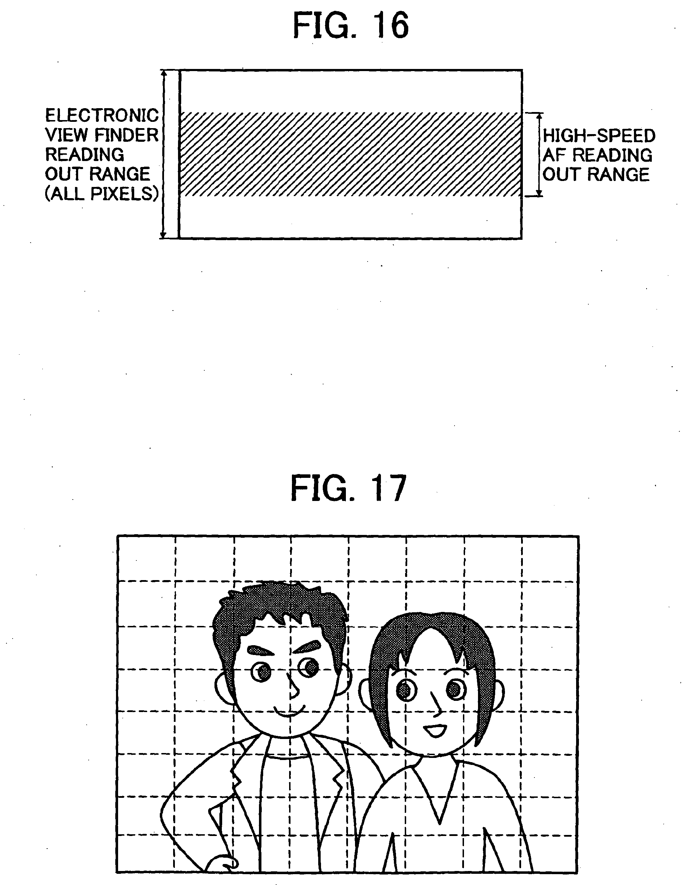

The photometry for an AE processing is performed by the image pickup device interface 11b. The image pickup device interface 11b loads the image data from the image sensing device 16 via the AFE unit 12 and then performs an accumulation of RGB data of the image data to perform the AE processing. An image is divided into 256 blocks, that is to say, divided horizontally into sixteen lines, and vertically into sixteen rows, as shown in FIG.17. The RGB data are accumulated in each of the blocks, and luminance distribution data are estimated from the accumulated RGB values to obtain a luminance distribution of the image or a brightness of the image of a main photographic subject. The brightness of the subject is determined from the obtained brightness of the image and an exposure time and a sensitizing level (gain set by the AGC unit 12c of the AFE unit 12) in the photometry processing. Suitable values of the exposure time and the sensitizing level and a suitable aperture value of the mechanical aperture are determined based on the obtained brightness of the subject. For a setting of the exposure time, a number of the clock pulse of the timing generator 13 for a shutter time control corresponding to an open time when an electronic shutter opens is changed. For a setting of the sensitizing level, the gain is changed. For a setting of the aperture value of the mechanical aperture, a diameter of an opening of the aperture of the shutter unit 15 is changed by the motor driver 18. As described above, the AE control is performed.

At the starting operations, the brightness is estimated from the aperture value, an open time of the electronic shutter and a luminance distribution in a gain of the AGC unit 12c, and then a setting value for a suitable exposure condition is estimated based on the brightness. Based on the estimated result, the number of electronic shutter pulses of the timing generator 13 is set, the diameter of the shutter unit 15 is controlled by the motor driver 18, and the gain of the AGC unit 12c of the AFE unit 12 is set so that an initial AE control at the starting operations is completed.

As mentioned above, if the initial AE control at the starting operations is completed, the digital camera is set in a photographable state, and a monitoring image as an electronic viewfinder (EVF) is displayed on the LCD monitor 4 as the display device. The sub CPU 20 is allowed to monitor the release button 5a. When the monitoring image is displayed, the photometry and the AE control are repeatedly performed every 100 msec.

The timing generator 13 according to an embodiment of the present invention will be described in detail.

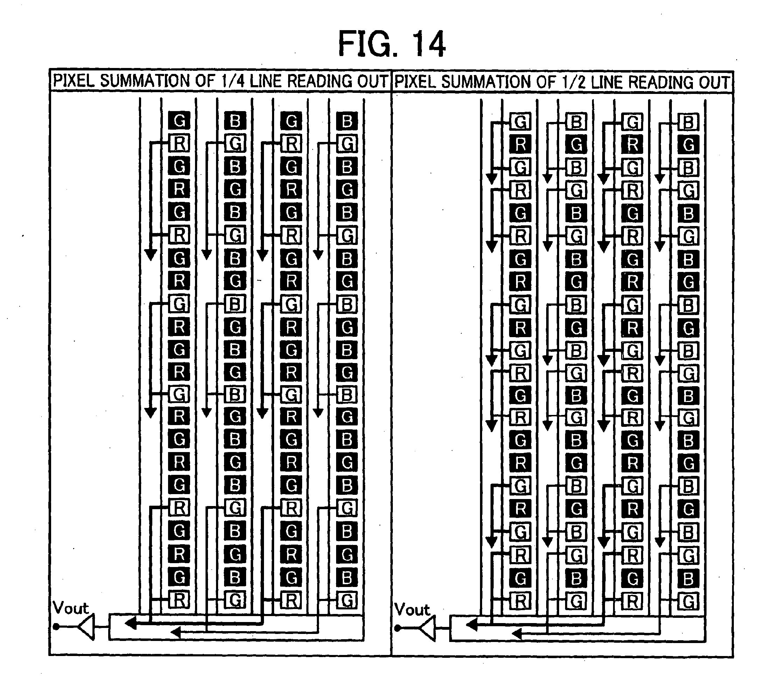

The timing generator 13 outputs a driving pulse signal for driving the camera head formed by the image sensing device 16 and the AFE unit 12. Examples of various types of reading modes driven by the driving pulse signal will be illustrated below with reference to FIGS. 14 to 16.

FIG.14 shows a reading-out of an interlace transfer performing a pixel summation. In the left-hand side of FIG.14, shown is a reading mode of a 1/4 line pixel summation in which one pixel of 4 pixels in each of a plurality of lines is read-out. This mode is used in an operation of the electronic viewfinder and one screen is read-out in 1/60 seconds. This mode is also used for the AE control in the starting operations of the embodiment of the present invention. In the right-hand side of FIG.14, shown is a reading mode of a 1/2 line pixel summation in which 4 pixels of 8 pixels in each lines are read-out. This mode is used for photographing a moving image and one screen is read-out in 1/30 seconds.

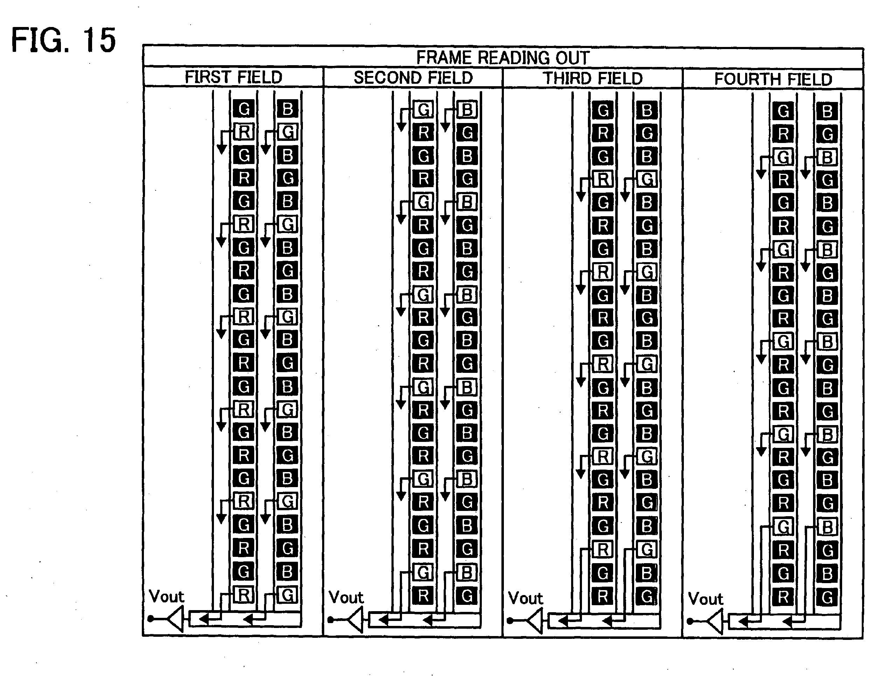

FIG.15 shows a reading-out of an all-pixel field transfer, that is to say, a frame reading mode in still image photographing in which an interlace transfer by dividing all pixels into 4 fields is performed so, that all pixels of the image sensing device 16 are read-out.

FIG.16 shows a pixel range read-out in a high-speed AF (autofocus) control. When the reading mode of the 1/4 pixel summation shown in the left of FIG.14 is set and only a center portion in a vertical direction of all the pixels corresponding to a half-range of the all pixels is read-out, a screen can be read-out in 1/120 seconds to achieve the high-speed AF control.

As mentioned above, in the conventional timing generator, the program data for outputting a driving pattern signal corresponding to each of these reading modes are stored in a ROM provided in the timing generator or a special logic circuit is provided. After that, in order to improve the development efficiency, a timing generator in which a volatile memory is provided is developed. In this timing generator, the programs written in the volatile memory are enabled to be rewritten. However, since the program data are required to be written in the volatile memory in the starting operations of the camera, it takes a long time to start the camera.

In this embodiment, as shown in FIG.1, the rewritable nonvolatile memory 13a such as an EEPROM and the rewritable volatile memory 13b such as a common RAM are provided in the timing generator 13.

If the nonvolatile memory 13a has a large capacity, all reading modes shown in FIGS. 14 to 16 are stored in the nonvolatile memory 13a of the timing generator 13a, and these data may be selectively used to drive each of units of the camera as needed. When the above-mentioned timing generator 13 is used, the program data are not required to be written in the starting operations of the camera so that high-speed start of the camera or the image sensing device can be achieved. Furthermore, the timing generator is not required to be developed or modified for each of the models of the image sensing devices such as a CCD so that the development efficiency of the timing generator can be improved.

The nonvolatile memory 13a may have a small capacity so that an inexpensive system can be achieved. For example, in order to operate in all the driving signal patterns shown in FIGS.14 to 16, the seven program data corresponding to each pattern (the reading modes of the 1/4 and 1/2 pixel summations shown in FIG.14, the reading modes of the first to fourth fields shown in FIG.15, and the high-speed reading mode for the high-speed AF processing) are required to be prepared. However, the capacity of the nonvolatile memory 13a may be set to about a volume of, for example, only one driving pattern signal and the signal is written in the nonvolatile memory 13a and the other driving pattern signals may be written in the volatile memory 13b, as is used conventionally. In this case, the driving pattern signal written in the nonvolatile memory 13a corresponds to, for example, the signal for the reading mode of the 1/4 pixel summation shown in the left of FIG.14 used for the AE control in the starting operations of the camera and then used for the electronic viewfinder. When the camera head is turned on and the AE control is performed, the program data corresponding to the data for the other reading modes can be written in the volatile memory 13b at the same time so that the following process is not delayed and the high-speed start of the camera can be achieved. Such structures make it possible for the high-speed start of the camera to be achieved and for the capacity of the nonvolatile memory 13a to be reduced so that a lowering of cost can be achieved.

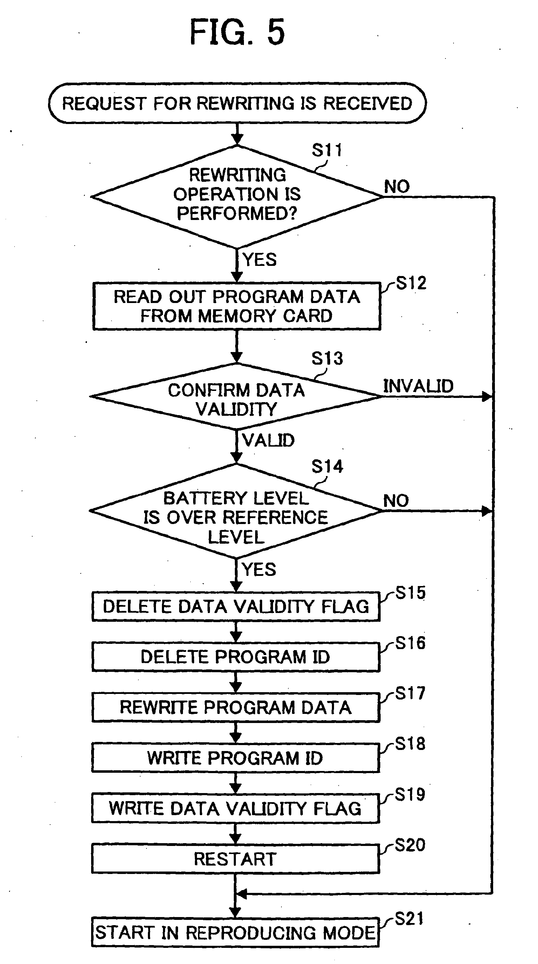

Data stored in the nonvolatile memory 13a of the timing generator 13 are configured to be rewritable after the nonvolatile memory 13a is mounted on the camera. A flowchart of a rewriting process is shown in FIG.5. There are two methods for rewriting the program data. One is a method in which the program data are read-out from the external memory card 21, and the other is a method in which the program data are read-out by communicating with the external device 101, such as a PC.

At first, the rewriting method via the memory card 21 will be described.

The program data for rewriting are written in the external memory card 21, which is used for storing image data during a recording operation, and the memory card 21 is mounted on the camera body. The mode dial 5h provided on the upper surface of the camera body shown in FIG.4 is operated to select the reproducing mode (shown by a triangular mark directed in the right direction), and the power button 5g is pressed to turn on while the T zoom button 5c and the upward (UP) direction of the direction button 5d provided on the back surface of the camera body are pressed. The above-mentioned sequence operations, if a request for rewriting the program data of the nonvolatile memory 13a from the memory card 21 is preliminarily set, allow the main CPU 11a to recognize the request for rewriting from the memory card 21, and then the rewriting operation is performed according to the flowchart shown in FIG.5.

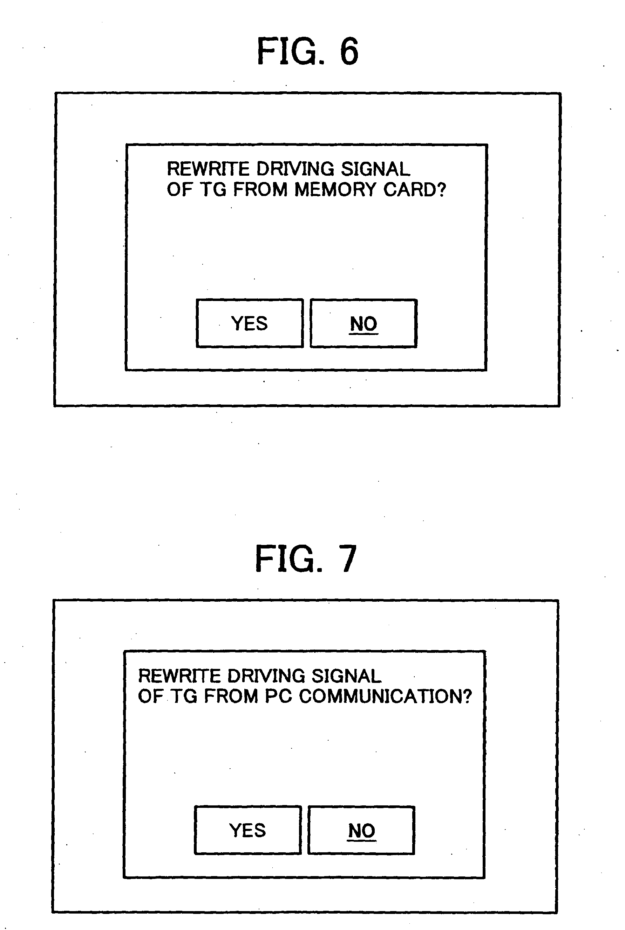

When the main CPU 11a receives the request for rewriting, a confirmation screen for confirming whether or not the program data stored in the nonvolatile memory 13a is required to be rewritten from the memory card 21 is displayed on the LCD monitor 4 via the display interface 11f (S11) as shown in FIG.6. If "YES" indicating that the rewriting operation is performed is selected by operating the left and right (LEFT, RIGHT) directions of the direction button 5d and then the OK button 5f is pressed down, the program data 14d for rewriting are read-out on the SDRAM 14 (S12),

Next, a validity of the program data 14d is confirmed (S13). The confirmation of the validity can be, for example, performed based on the size of the program data, identifying information of the program data (program ID), and a check sum. If it is judged that the program data is valid by the confirmation of the validity, the power level of the battery of the camera is checked (S14). Then it is confirmed whether the battery is sufficient to substantially complete the rewriting of the program data by the checking of the battery power level.

In the step S14, if it is judged that the power voltage of the battery is over a reference level of the power voltage, the rewriting operation (S15 to S19) is started.

The rewriting operation is performed by the main CPU 11a via a serial input/output. At first, the main CPU 11a allows the nonvolatile memory 13a of the timing generator 13 such as the EEPROM to be set to a rewriting mode, deletes information showing the validity of the program data, for example, a validity flag (S15), and then deletes the program identifying information showing the corresponding image sensing device 16 and the operational mode (S16).

Next, the program data are rewritten (S17), the program identifying information is written (S18), and then the validity flag is written (S19) to complete the rewriting. After the rewriting operation is completed, restarting of the system is automatically performed (S20), and the camera is started in the reproducing mode (S21). In the confirmation of the rewriting of the step S11, if "NO" is selected such that the rewriting is not performed by operating the left and right (LEFT, RIGHT) directions of the direction button 5d, and then the OK button is pressed down, the step skips to the step S21 and the camera is restarted in the reproducing mode. In the confirmation of the validity of the step S13, if it is judged that the program data is invalid, the step skips to the step S21 and the camera is restarted in the reproducing mode.

In addition, in the check of the battery power level of the step S14, if it is judged that the battery power level does not meet the reference power voltage, the step skips to the step S21 and the camera is restarted in the reproducing mode.

Next, the rewriting method from the external device such as the PC via the communication interface 11h will be described.

Communication with the external device 101 is enabled when the mode dial 5h. provided on the upper surface of the camera body shown in FIG.4 is set to the communication mode (in this case, indicated by a two headed arrow). Although a communication method by a USB (universal serial bus) cable is adopted in this embodiment, other communication methods such as communication by radio transmission may be used.

In a state where the USB cable is connected between the external device 101 and the communication interface 11h, for example, the communication mode is selected by operating the mode dial 5h provided on the upper surface of the camera body shown in FIG.4. The power button 5g is turned on while the T zoom button 5c and the upward (UP) direction of the direction button 5d are pressed to start the camera. These sequences of operations, if a request for rewriting the program data of the nonvolatile memory 13a from the external device 101 is preliminarily set, allow the main CPU 11a to recognize the request for rewriting from the external device 101, and then to display a confirmation screen confirming whether or not the rewriting operation is required to be performed according to the flowchart shown in FIG.7 on the LCD monitor 4.

If "YES" for rewriting is selected by operating the left and right (LEFT, RIGHT) directions of the direction button 5d and the OK button 5f is pressed down, a communication with the external device 101 is started. If a data transmission of the program data for rewriting from an application software for communication of the external device 101 is started, the main CPU 11a writes the received data on the SDRAM 14. The program data temporarily stored in the SDRAM 14 is written in the rewritable nonvolatile memory 13 of the timing generator 13 similarly to the case of the memory card.

Next, the high-speed start of the timing generator 13 will be described as a main part of the present invention. The timing generator 13 according to an embodiment of the present invention has a rewritable nonvolatile memory such as an EEPROM so that the high-speed start according to the present invention can be achieved.

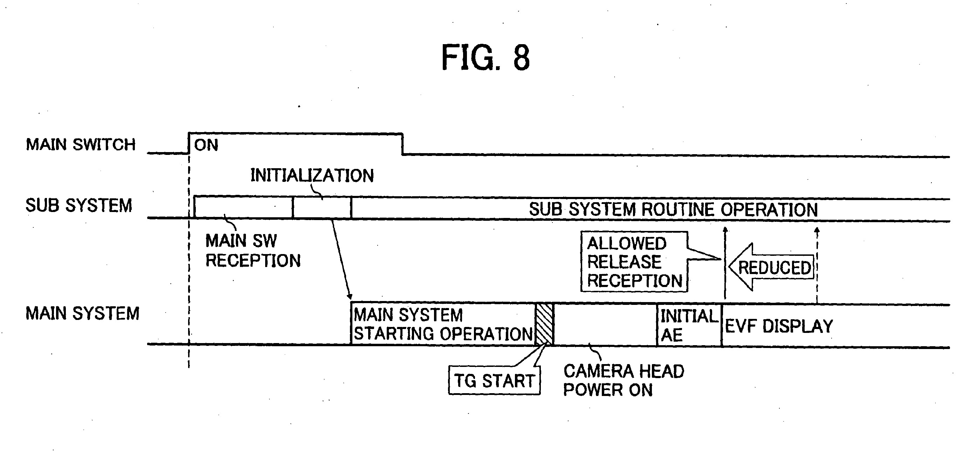

Operations of the high-speed start according to the first embodiment of the present invention will be described with reference to a timing chart shown in FIG. 8.

When the sub CPU 20 receives the request for starting the camera by operating the power button 5g as the main switch to turn on, powers of a main system including the signal processing unit 11 and the timing generator 13 are activated as an initializing processing. However, the powers of the image sensing device 16 and the AFE unit 12 are not activated at this time.

The main CPU 11a reads out the program of the main system from the program ROM 19 after the camera starts, and loads the program data to the SDRAM 14. When the loading of the program data of the main program to the SDRAM 14 is completed, the main CPU 11a performs the starting operation of the timing generator 13. In this embodiment of the present invention, the main CPU 11a does not load the program data to the timing generator during the starting operation. Regarding this point, the timing generator 13 according to the embodiment of the present invention is different from the conventional timing generator shown in FIG.18.

The timing generator 13 includes the nonvolatile memory 13a such as an EEPROM and the volatile memory 13b such as a RAM as shown in FIG.1. At least one program datum for outputting the driving timing which allows the initial AE control when the camera starts is stored in the nonvolatile memory 13a. In this embodiment, the same driving timing signal is used for performing the AE control and the driving timing signal for operating the electronic viewfinder. In the timing generator 13, data validity information for judging whether or not the program data is normally stored in the nonvolatile memory 13a, and program identifying information showing the image sensing device 16 corresponding to the program data stored in the nonvolatile memory 13a and the driving mode are written in the nonvolatile memory 13a.

In the starting operation of the timing generator 13, at first, the validity information and the program identifying information are read out to confirm whether or not a good signal can be output to the image sensing device 16 and the AFE unit 12. If it is judged that the program data is good based on the data validity information and the program identifying information, the driving signal for the initial AE control and the operation of the electronic viewfinder are permitted to be output, and the powers of the camera head, that is to say, the image sensing device 16 and the AFE unit 12 are activated. As mentioned above, after outputs of the image sensing device 16 and the AFE unit 12 are stabilized, the initial AE control is performed. After the AE control is completed, the release operation is allowed, and the display of the electronic viewfinder is started.

As mentioned above, if the program data of the driving timing signal for performing the AE control is preliminarily written in the timing generator 13, the loading of the program data before the power of the image sensing device 16 is activated is not required so that the high-speed starting can be achieved.

Although the same driving timing program is used for the initial AE control and for the operation of the electronic viewfinder in this embodiment, different driving timing programs may be used.

For example, if the timing generator 13 can have only one program datum in a region of the nonvolatile memory 13a and the driving program data for operating the electronic viewfinder differs from that for performing the initial AE control, the driving timing program for the electronic viewfinder may be written in the volatile memory during an operation for activating the powers of the camera head (that is to say, the image sensing device 16 and the AFE unit 12) and the initial AE control so that the high-speed starting can be achieved.

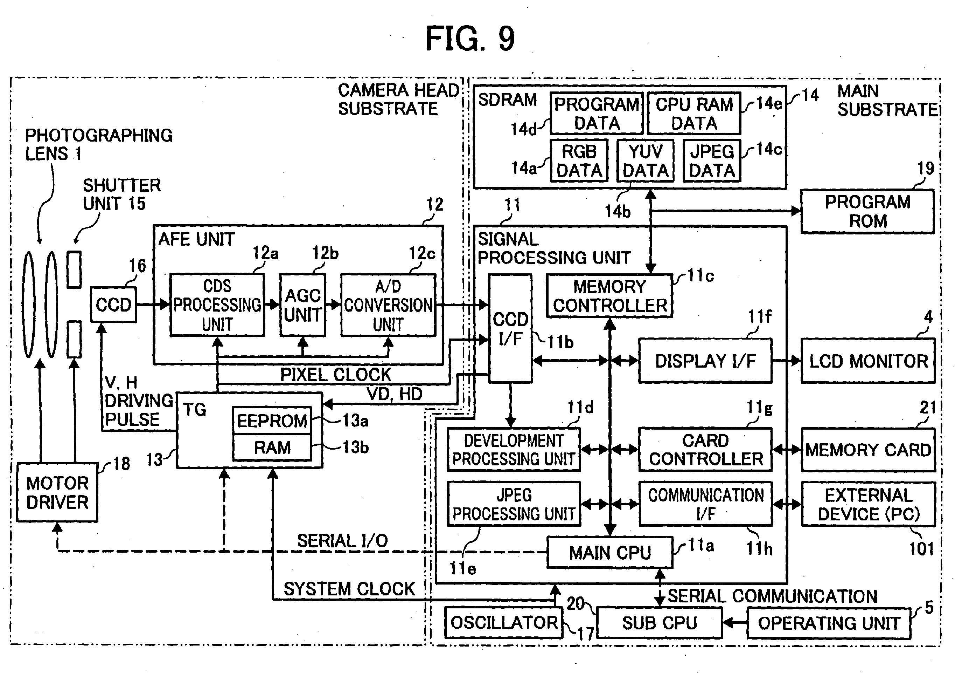

FIG.9 shows an example of a substrate configuration of the digital camera system according to an embodiment of the present invention. The system shown in FIG.9, indicated by the same reference numbers as the same structures shown in FIG.1, has a two-substrate configuration, that is to say, a main substrate MB having the signal processing unit 11 including the main CPU 11a, the SDRAM 14, the oscillator 17, the program ROM 19, and the sub CPU 20, and a camera head substrate CH having the AFE unit 12, the timing generator 13, and the image sensing device 16. Due to this substrate configuration, the above data validity information and the program identifying information can be confirmed more effectively. When assembling or repairing the digital camera, the main substrate MB is connected to the camera head substrate CH. However, if the program data written in the nonvolatile memory 13a of the timing generator 13 is abnormal or the data does not match the mounted solid-state image sensing device 16, there is a possibility of the image sensing device 16 being broken itself. Therefore, the main CPU 11a is configured to confirm the validity information or the program identifying information from the timing generator 13 so that the driving signal matching properties of the used image sensing device can be used.

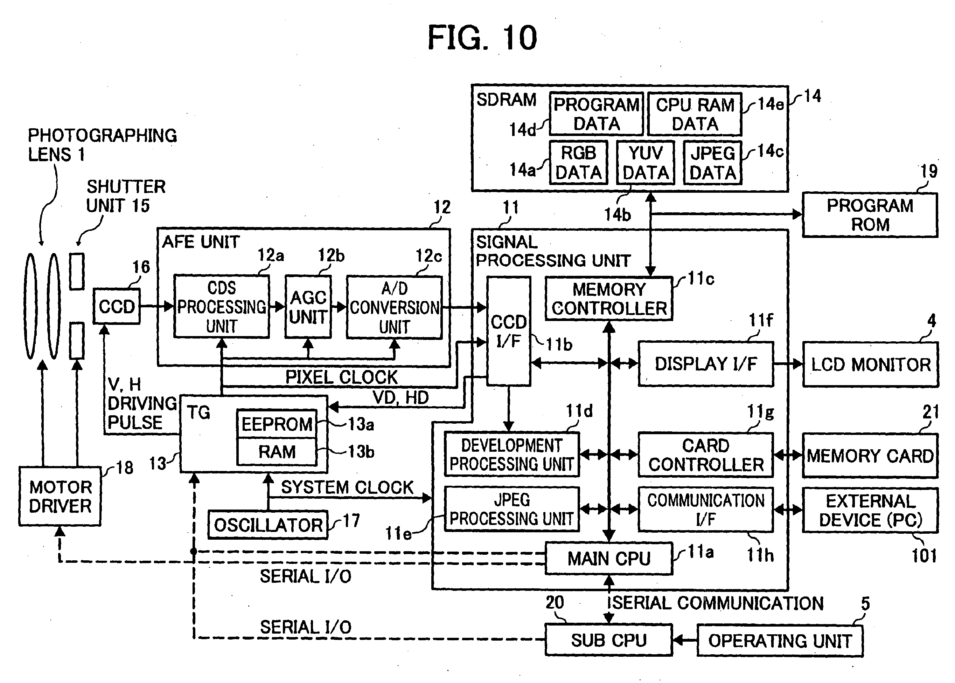

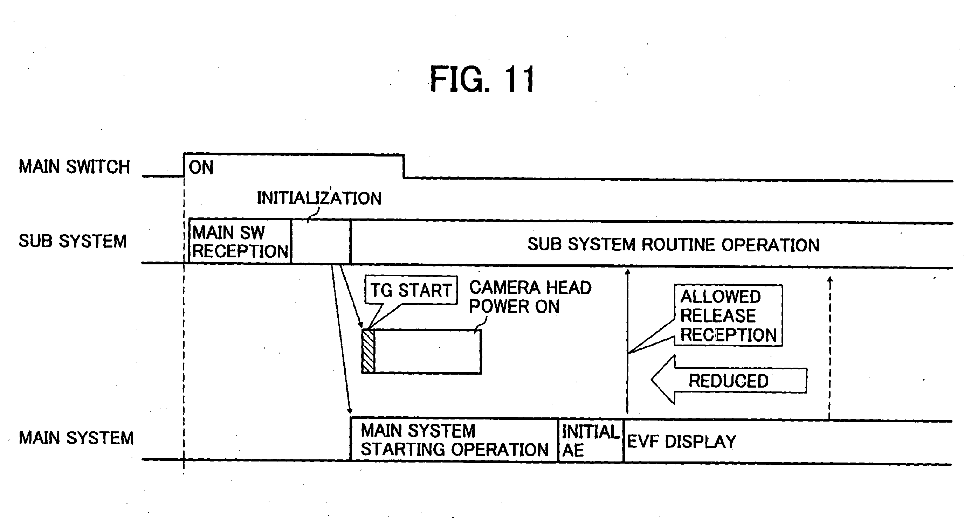

In the digital camera system according to a second embodiment of the present invention, the sub CPU 20 structuring the subsystem performs the starting operation of the timing generator 13 and controls the power of the camera head. Operations will be particularly described with reference to a block diagram of a system configuration shown in FIG.10 and a timing chart shown in FIG.11. Since each of the structures in FIG.10 are substantially the same as those in FIG.1, although slightly different in pathways of the signals, the same reference numbers are used for the same structures as those in FIG.1, and explanations of the same structures are omitted.

When the sub CPU 20 receives a request for starting by the power button 5g, the sub CPU 20 performs a power activation of the camera system including the signal processing unit 11 and the timing generator 13 as an initialization processing.

As mentioned above, the CPU 11a reads out the program data of the main system from the program ROM 19 after the camera starts, and loads the program data to the SDRAM 14. In parallel with the above operations, the sub CPU 20 performs the starting operation of the timing generator 13.

The timing generator 13 includes the nonvolatile memory 13a such as the EEPROM, and the volatile memory 13b such as RAM as shown in FIG. 10. At least the driving timing program datum for performing the initial AE control is written in the nonvolatile memory 13a.

In this embodiment, the same driving timing signal is used for the AE control and for the operation of the electronic viewfinder.

In the starting operation of the timing generator 13, the data validity information and the program identifying information are read from the sub CPU 20 by the serial input/output to confirm whether or not the normal driving signal can be output to the image sensing device 16 and the AFE unit 12. If it is judged that this information is good, the driving signal for performing the initial AE control and the operation of the electronic viewfinder via the serial input/output are permitted and the powers of the image sensing device 16 and the AFE unit 12 are activated.

Since it takes about 300 milliseconds for the main system to load the program data, the output of the camera head is stabilized until the AE control is started by the program data. Therefore, the initial AE control can be started immediately, the initial AE control is performed and then after the AE control is completed, the release is allowed to start to display the electronic viewfinder.

As mentioned above, the program data of the driving timing signal for performing the AE control are preliminarily written in the timing generator 13. If the sub CPU 20 can perform the starting operation of the timing generator 13 and turn on the power of the camera head, the speeding-up of the start of the camera can be achieved more effectively than in the above-mentioned first embodiment.

In this embodiment, although the same driving timing program data are used for the initial AE control and for the operation of the electronic viewfinder, different driving timing programs may be used. In this case, the driving timing program data for the operation of the electronic viewfinder are written in the volatile memory 13b during the initial AE control so that the time for starting the camera can be reduced.

In the digital camera system according to a third embodiment of the present invention, the timing generator 13 has the nonvolatile memory 13a such an EEPROM, which has a sufficient capacity to write two or more program data, and one of these program data is specified to be used as an initial operating mode. In this case, one of the two or more program data written in the nonvolatile memory 13a may be specified to be used as the initial operating mode by the timing generator 13.

In the illustrated embodiment, when the digital camera is assembled, the program data for operating the electronic viewfinder are preliminarily written in an initial program area of the nonvolatile memory 13a of the timing generator 13. Since a region of the nonvolatile memory 13a of the timing generator 13a has the initial program area and also areas in which four other programs can be written, the program data of the driving signal for the first to fourth fields in all the pixel field transfers for the still image photographing shown in FIG.15 are written.

The timing generator 13 also has a region of the volatile memory 13b such as a RAM in which one program datum can be written. If the high-speed AF control is performed, the program data for reading out as shown in FIG.16 just before the AF control is written. If photographing of a moving image is requested, the program data for reading out as shown in the right of FIG.14 are written just before photographing the moving image. That is to say, the driving mode which is less frequently used is overwritten as needed in a common memory area of the volatile memory 13b so that even the timing generator 13 having the small-capacity volatile memory 13b can be used for a number of the driving modes.

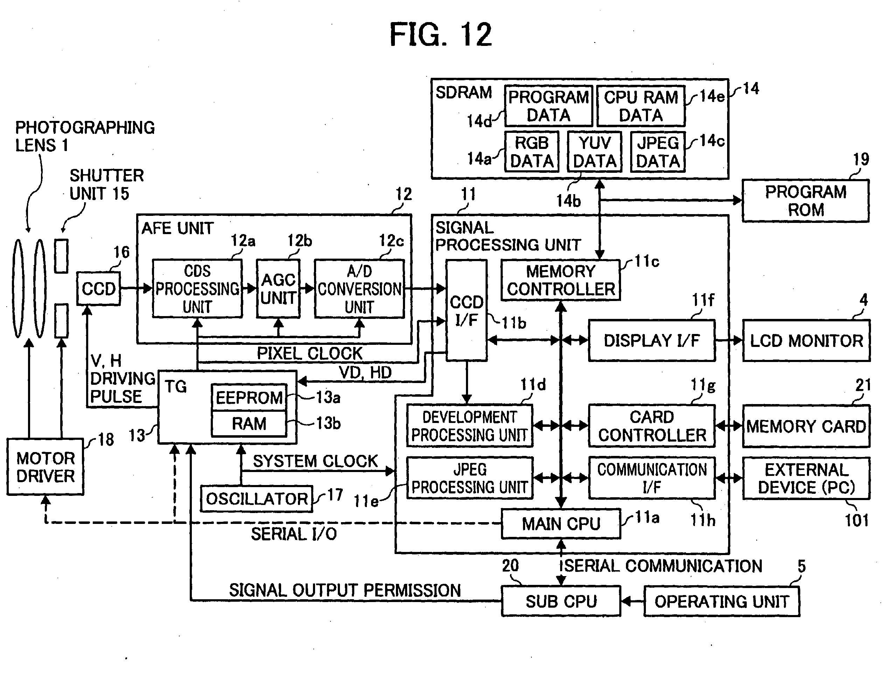

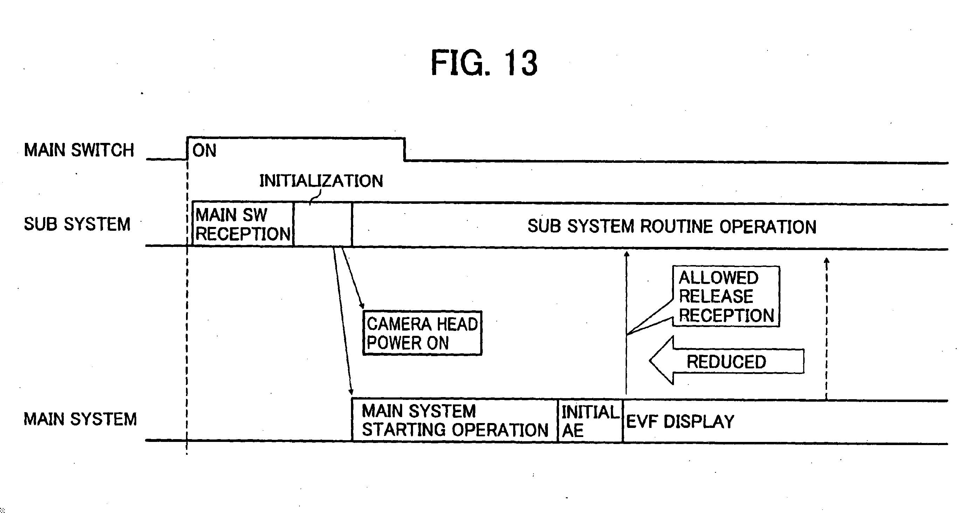

A detailed explanation of operations will be described with reference to a block diagram shown in FIG.12 and a timing chart shown in FIG.13. Since each of the structures in FIG.12 are substantially the same as those in FIGS.1 and 10, although slightly different in pathways of the signals, the same reference numbers are used for the same structures as those in FIG.1, and explanations of the same structures are omitted.

In the digital camera according to a third embodiment of the present invention, the timing generator 13 has an input port to permit/prohibit an output of the driving signal from the outside to allow the sub CPU 20 to switch a setting of a permission/prohibition of the output.

As shown by the timing chart of FIG.13, if the power button 5g is pressed down by a user's operation to provide a request for starting the system, the sub CPU 20 activates the power of the main system including the signal processing unit 11 and the timing generator 13 as an initialization operation. However, the powers of the image sensing device 16 and the AFE unit 12 are not activated at this time. As mentioned above, the main CPU 11a reads out the program data for the main system from the program ROM 19 after the system is activated and loads the program to the SDRAM 14.

In parallel with the above processes, the sub CPU 20 activates the power of the camera head and, at the same time, allows the timing generator 13 to be set in a signal output permissive state. As mentioned above, the timing generator 13 reads out the program data stored in the area in which the initial operating mode of the nonvolatile memory such as an EEPROM is written to start to output the driving signal pulse.

Since it takes about 300 milliseconds for the main system to load the program data, when the operation of the AE control is started, the output of the camera head is stabilized. Accordingly, since the initial AE control can be started immediately, the initial AE control is performed. After the initial AE control is completed, the release is permitted to be allowed and at the same time the display of the electronic viewfinder is started.

As mentioned above, in the third embodiment, the high-speed starting can be achieved as well as in the second embodiment.

Furthermore, in this case, since the timing generator 13 has the initial operating mode, the sub CPU 20 is required to operate only the output permission of the driving timing signal of the timing generator 13 by an output of a universal port to achieve the high-speed starting without requiring complex processing using the serial input/output from the sub CPU 20.

In this embodiment, although the same driving timing program data are used for the initial AE control and for the operation of the electronic viewfinder, different program data may be used. Even in this case, if the driving timing program data for the operation of the electronic viewfinder are written in the volatile memory during an operational time of the initial AE control, the high-speed starting can be achieved.

As mentioned above, an imaging apparatus according to an aspect of the present invention has a timing generation device for inputting a driving timing signal to drive an image pickup device. The timing generation device including a rewritable nonvolatile memory and a rewritable volatile memory inputs the driving timing signal for the image pickup device based on program data stored in at least one of the nonvolatile memory and the volatile memory and when the imaging apparatus is started starts the image pickup device using the program data preliminarily stored in the nonvolatile memory. According to an aspect of the present invention, a method is provided for starting an imaging apparatus having a timing generation device which has a rewritable nonvolatile memory and a rewritable volatile memory and inputs a driving timing signal for an image pickup device based on program data stored in at least one of the nonvolatile memory and the volatile memory, having a step of starting the image pickup device using the program data preliminarily stored in the nonvolatile memory when the imaging apparatus is started. Operations are performed based on the program data preliminarily stored in the nonvolatile memory of the timing generation device when starting the imaging apparatus. Therefore, the operation can be performed before writing of the program data on the volatile memory or the nonvolatile memory is completed so that a speed-up start of the imaging apparatus can be achieved.

In an imaging apparatus according to an embodiment of the present invention, the program data preliminarily stored in the nonvolatile memory include at least program data configured to obtain information to control an exposure. In a starting method of an imaging apparatus according to an embodiment of the present invention, the program data preliminarily stored in the nonvolatile memory include at least one program data configured to obtain information to control exposure. In these embodiments, a driving mode of the imaging apparatus is set such that the program data required for starting the imaging apparatus is adapted to perform photometry to control automatically an exposure.

In an imaging apparatus according to an embodiment of the present invention, the program data preliminarily stored in the nonvolatile memory include at least program data to perform operations of an electronic viewfinder. In a starting method of an imaging apparatus according to an embodiment of the present invention, the program data preliminarily stored in the nonvolatile memory include at least program data to perform operations of an electronic viewfinder. In these embodiments, the driving mode of the imaging apparatus is set such that the program data required for starting the imaging apparatus is adapted to perform the operations of the electric viewfinder.

If all program data are written in the nonvolatile memory, it is not necessary to write the program data in the volatile memory every time when the imaging apparatus is started. However, since the nonvolatile memory is required to have a minimum capacity so as to store the program adjusted for driving various image pickup devices, there are problems in that the image pickup device having a small number of operation modes increases in cost and requires a large amount of power. Accordingly, if at least the driving for the photometry when the camera is started is enabled and during the photometry and the initial AE control, other required program data are written, and high-speed starting, cost reduction, and electrical power saving can be achieved.

Depending on equipment specifications, it is possible for the amount of light exposure to be constant or the amount of light exposure to be fixed. In these cases, the driving mode for starting the image pickup device is required to be set to the driving mode for the operation of the electronic viewfinder. Accordingly, if at least program data allowing the operation of the electronic viewfinder are written in the nonvolatile memory, high-speed starting, cost reduction, and electrical power saving can be achieved.

An imaging apparatus according to an aspect of the present invention has an image pickup device for converting an optical image of a subject into electrical signals and a timing generation device for outputting a driving timing signal for the image pickup device. The timing generation device has a rewritable nonvolatile memory in which program data is stored, a timing signal generation unit to generate the driving timing signal for the image pickup device based on the program stored in the nonvolatile memory, and a data validity judgment unit for storing data validity information used to judge the validity of the data written in the nonvolatile memory. The imaging apparatus further includes a control unit to control operations of the entire imaging apparatus. The control unit reads out the data validity information from the data validity judgment unit of the timing generator, and if it is judged that the program stored in the nonvolatile memory is valid, it allows the timing signal generation unit to be driven based on the program stored in the nonvolatile memory to output the driving timing signal for the image pickup device from the timing generation device.

According to an aspect of the present invention, a method for protecting an image pickup device of an imaging apparatus having the image pickup device for converting an optical image of a subject into electrical signals and a timing generation device for outputting a driving timing signal for the image pickup device, the timing generation device has a rewritable nonvolatile memory in which program data is stored, a timing signal generation unit to generate the driving timing signal for the image pickup device based on the program data stored in the nonvolatile memory, and a data validity judgment unit for storing a data validity information used to judge the validity of the data written in the nonvolatile memory. In the imaging apparatus further including a control unit to control operations of the entire imaging apparatus, the method has the steps of reading out the data validity information from the data validity judgment unit of the timing generator, and if it is judged that the program data stored in the nonvolatile memory is valid, it allows the timing signal generation unit to be driven based on the program data stored in the nonvolatile memory to output the driving timing signal for the image pickup device from the timing generation device by the control unit so that an incorrect driving timing signal is not input to the image pickup device to prevent a failure of the image pickup device.

Due to the imaging apparatus or the method for protecting the image pickup device according to the embodiments of present invention, the driving signal for the image pickup device is output from the timing generation device based on the program data stored in the nonvolatile memory so that an abnormal signal which may cause the image pickup device to fail is prevented from being input to the image pickup device. The above embodiments of the present invention can achieve the prevention of the failure of the image pickup device by reading out the data validity information stored in the timing generation device and outputting the output signal if it is judged that the program data are valid.

An imaging apparatus according to an aspect of the present invention has an image pickup device for converting an optical image of a subject into electrical signals and a timing generation device for outputting a driving timing signal for the image pickup device. The timing generation device has a rewritable nonvolatile memory in which program data is stored, a timing signal generation unit to generate the driving timing signal for the image pickup device based on the program stored in the nonvolatile memory, and a mode identifying information unit for storing mode identifying information used to identify a mode of the program data written in the nonvolatile memory and judge whether or not the program data stored in the nonvolatile memory are enabled to drive the pickup device, The imaging apparatus further includes a control unit to control operations of the entire imaging apparatus. The control unit reads out the mode identifying information from the mode identifying information unit of the timing generator, and if it is judged that the program data stored in the nonvolatile memory are enabled to drive the pickup device, allows the timing signal generation unit to be driven based on the program data stored in the nonvolatile memory to output the driving timing signal for the image pickup device from the timing generation device.

According to an aspect of the present invention, a method for protecting an image pickup device of an imaging apparatus having the image pickup device for converting an optical image of a subject into electrical signals and a timing generation device for outputting a driving timing signal for the image pickup device, the timing generation device has a rewritable nonvolatile memory in which program data is stored, a timing signal generation unit to generate the driving timing signal for the image pickup device based on the program data stored in the nonvolatile memory, and a mode identifying information unit for storing mode identifying information used to identify a mode of the program data written in the nonvolatile memory and judge whether or not the program data stored in the nonvolatile memory are enabled to drive the pickup device. In the imaging apparatus further including a control unit to control operations of the entire imaging apparatus, the method has the steps of reading out the mode identifying information from the mode identifying information unit of the timing generator, and if it is judged that the program data stored in the nonvolatile memory are enabled to drive the pickup device, it allows the timing signal generation unit to be driven based on the program stored in the nonvolatile memory to output the driving timing signal for the image pickup device from the timing generation device by the control unit so that an incorrect driving timing signal is not input to the image pickup device to prevent a failure of the image pickup device.

Due to the imaging apparatus or the method for protecting the image pickup device according to the embodiments of present invention, the mode identifying information stored in the timing generation device is read out and if it is confirmed that the timing program stored in the nonvolatile memory is enabled to drive the image pickup device, the signal is output so that the failure of the image pickup device is prevented.

A timing generation device for an image pickup device according to an aspect of the present invention, which generates a timing signal for driving the image pickup device, includes a rewritable nonvolatile memory in which program data are stored and a timing signal generation unit which outputs the driving timing signal based on the program data stored in the nonvolatile memory.

The timing generation device according to an embodiment of the present invention further includes a volatile memory which is rewritable and readable at a higher speed than the nonvolatile memory and a mode switching unit which switches a memory to be read between the nonvolatile memory and the volatile memory based on the driving mode of the image pickup device. The timing generation device according to the embodiment has a volatile memory which enables high-speed reading/writing. The reason the programmable timing generation device has been developed is to provide a unique timing generation device for various image pickup devices without developing a timing generation device for each model of the image pickup devices, and the nonvolatile memory is required to have the largest capacity which enables storage of all driving modes of each of any image pickup devices. However, the timing generation device according to the above embodiment of the present invention has the volatile memory region which is rewritable at high speed in a part of the timing generation device and the data is rewritten as needed so that the capacity of the memory can be reduced to achieve cost reduction and electrical power saving.

The timing generation device according to an embodiment of the present invention further includes a rewriting unit which rewrites the program data stored in the volatile memory during the operation based on the program data stored in the nonvolatile memory. The timing generation device according to the embodiment allows reading/writing access to the volatile memory during the operation based on the program data stored in the nonvolatile memory. That is to say, the program data for photographing a still image is written in the volatile memory during the initial AE control or the like by the program data stored in the nonvolatile memory so that photographing a still image can be performed after starting without waiting.

The timing generation device according to an embodiment of the present invention further includes a unit configured to store two or more program data in the volatile memory and rewrite a first program datum of the two or more program data during operations based on a second program datum of the two or more program data. The timing generation device according to the embodiment can store the two or more program data and allows rewriting of the first program data during reading of the second program data. Accordingly, the timing generation device can be enabled to be used for various driving modes of the image pickup device with a small capacity so that downsizing of a circuit substrate, cost reduction and electrical power saving can be achieved.

An imaging apparatus according to an aspect of the present invention has an image pickup device which converts an optical image of a subject into electrical signals and a timing generation device which generates a driving timing signal to drive the image pickup device. The timing generation device has a rewritable nonvolatile memory, a volatile memory which is enabled to be rewritten and read out at higher speed than the nonvolatile memory and a unit configured to output the driving timing signal for the image pickup device based on the program data stored in at least one of the nonvolatile memory and the volatile memory. Since a conventional programmable timing generation device has only a volatile memory, upon being started the program data for outputting the driving signal are required to be written to the timing generation device. In such systems, the starting of the image pickup device is delayed for a time for writing the program data. Since the timing generation device has the nonvolatile memory and starts the operations based on the program data preliminarily stored in the nonvolatile memory, high-speed starting can be achieved. Furthermore, since the data is preliminarily stored, even when the powers of the timing generation device and the image pickup device are accidentally activated, the timing generation device is operated by the stored data so that the image pickup device can be protected.

In the imaging apparatus according to an embodiment of the present invention, at least one of program data required for starting the imaging apparatus device and frequently used program data are stored in the nonvolatile memory. The program data required for starting the imaging apparatus are, for example, driving data to perform photometry for the AE control when starting or data for the operation of the electronic viewfinder. Such data is preliminarily stored in the nonvolatile memory so that high-speed starting can be achieved. The frequently used program data may also be stored in the nonvolatile memory. If a plurality of data can be stored in the nonvolatile memory and the data for the operation of the electronic viewfinder and for photographing the still image are stored in the nonvolatile memory, rewriting operations each time of photographing are not required, so that throughput of the CPU is reduced to improve continuous photographing cycles.

In the imaging apparatus according to an embodiment, the volatile memory is used such that a part of the program data are overwritten in an overwriting area of the volatile memory. That is to say, the imaging apparatus is used while rewriting a part of the program data by overwriting in the overwriting area. As mentioned above, the frequently used data are stored in a non-overwriting area in which the data are not to be rewritten and less frequently used program data are used while being rewritten. Because of the lesser frequency use, operability of the entire imaging apparatus is not reduced and the memory size of the timing generation device is reduced so that cost reduction and electrical power saving can be achieved.

In the imaging apparatus according to an embodiment of the present invention, the program data which are used while being rewritten include program data for performing high-speed AF (automatic focusing). In the imaging apparatus, program data for the high-speed AF are used as less frequently used program data. In the high-speed AF driving mode, because an amount of read-out data is 1/2 (a half in relation to that of all pixels), the screen updating speed can be doubled and a maximum exposure time is also set to a half in relation to a normal exposure time. Therefore, the driving mode can be used only when the subject has sufficient brightness. Accordingly, an exclusive area for the less frequently used data is not provided in the nonvolatile memory and the volatile memory, that is to say, each of the less frequently used data uses together the volatile memory so that the memory size can be reduced and cost reduction and electrical power saving can be achieved.

In the imaging apparatus according to an embodiment of the present invention, the program data which are used while being overwritten in the same area of the volatile memory include the program data for photographing a moving image. The less frequently used data are the driving mode for photographing a moving image shown in the right of FIG. 14, and are used while being overwritten.

An imaging apparatus according to an aspect of the present invention has an image pickup device for converting an optical image of a subject into electrical signals and a timing generation device for outputting a driving timing signal for the image pickup device. The timing generation device has a rewritable nonvolatile memory in which program data is stored and a timing signal generation unit to generate the driving timing signal for the image pickup device based on the program stored in the nonvolatile memory. The imaging apparatus further includes an external interface unit and a rewriting unit which rewrites the program data stored in the nonvolatile memory based on information obtained via the external interface unit. Since a conventional programmable timing generation device has only a volatile memory, upon being started the program data for outputting the driving signal are required to be written to the timing generation device. In such systems, the starting of the image pickup device is delayed for a time for writing the program data. In the imaging apparatus, since the timing generation device has the nonvolatile memory and starts based on the program data preliminarily stored in the nonvolatile memory, high-speed starting can be achieved. Furthermore, the nonvolatile memory provided in the timing generation device mounted on the substrate is enabled to be rewritten so that it is easy to operate when the data in the timing generation device is required to be rewritten because of problems found after the imaging apparatus is assembled or marketed.

In the imaging apparatus according to an embodiment of the present invention, the external interface unit is a memory card connector which connects the memory card to the imaging apparatus, and the rewriting unit includes a unit which rewrites the program data stored in the nonvolatile memory based on information stored in the external memory card, which is obtained via the memory card connector. In the imaging apparatus, the external interface unit is a communication interface unit to perform a cable communication with an external device, and the rewriting device includes a unit which rewrites the program data stored in the nonvolatile memory based on information from the external device, which is obtained via the cable communication by the communication interface unit. In the imaging apparatus, the external interface unit is the communication interface unit which performs radio communication with the external device, and the rewriting unit includes a unit which rewrites the program data stored in the nonvolatile memory based on the information from the external device, which is obtained via radio communication by the communication interface unit. The imaging apparatus is adapted to rewrite the data stored in the nonvolatile memory of the timing generation device using the existing interface. The memory is provided to be rewritable without special units so that new program data can be distributed via an internet site (so-called Web) when the program data stored in the memory of the timing generation device are required to be rewritten. Accordingly, instancy of operating is improved and cost for services can be reduced.

In the imaging apparatus, the timing generation device has a data validity judgment unit for storing data validity information used to judge the validity of the data written in the nonvolatile memory and a driving unit which, if it is judged that the rewritten program stored in the nonvolatile memory is valid using the data validity information stored in the data validity judgment unit, drives the image pickup device by the driving signal using the rewritten program data of the nonvolatile memory. In the system in which the imaging apparatus outputs the driving signal for the image pickup device from the timing generation device based on the program data stored in the nonvolatile memory, an abnormal signal is prevented from being input to the image pickup device so that the image pickup device can be protected. That is to say, the data validity information stored in the timing generation device is read out and if it is judged that the program data is valid, the signal is output so that the failure is prevented.

In the imaging apparatus according to an embodiment of the present invention, the rewriting unit has a removing unit which removes the previous data validity information stored in the data validity information unit before rewriting the program data to drive the image pickup device stored in the nonvolatile memory. The imaging apparatus rewrites the data validity information indicating that the program data is invalid.

In the imaging apparatus according to an embodiment of the present invention, the rewriting unit has a unit which writes new data validity information to the data validity information unit after the program data to drive the image pickup device is written in the nonvolatile memory. The imaging apparatus can rewrite the data validity information indicating that the program data is valid. If the writing of the program data is not normally completed, the failure of the imaging device can be prevented.

In the imaging apparatus, the timing generation device further includes a mode identifying information unit which stores mode identifying information used to identify a mode of the program data written in the nonvolatile memory and judge whether or not the program data stored in the nonvolatile memory is enabled to drive the pickup device. The imaging apparatus further includes a control unit to control operations of the entire imaging apparatus. The timing generation device also includes a driving unit which, if it is judged that the rewritten program data stored in the nonvolatile memory are enabled to drive the image pickup device, drives the image pickup device by the driving timing signal using the rewritten program data stored in the nonvolatile memory. The imaging apparatus can protect the image pickup device 16 from the failure. That is to say, the mode identifying information is judged, and only when it is judged that the program data are enabled to drive the image pickup device, the signal is output to prevent the failure of the image pickup device.

In the imaging apparatus according to an embodiment of the present invention, the rewriting unit has a removing unit which removes the previous mode identifying information stored in the mode identifying unit before rewriting the program data to drive the image pickup device stored in the nonvolatile memory. The imaging apparatus removes the mode identifying information before rewriting the program data. Accordingly, if the rewriting of the data is not normally completed, it is judged that the mode identifying information does not match the image pickup device in the following operations. Therefore, the driving signal is not output so that the failure of the image pickup device can be prevented.

In the imaging apparatus according to an embodiment of the present invention, the rewriting unit has a unit which writes new mode identifying information to the mode identifying unit after the program data to drive the image pickup device are written in the nonvolatile memory. The imaging apparatus can rewrite the mode identifying information matching the written program data after writing of the program data is normally completed. If the writing of the program data is not normally completed, the failure of the imaging device in following operations can be prevented. The above-mentioned judgment is effective when the substrates are structured as shown in FIG.9. The main substrate MB is connected to the camera head substrate CH when the camera is assembled or repaired. However, if the program data stored in the nonvolatile memory of the timing generation device are abnormal or not enabled for the image pickup device, it is possible for the image pickup device to fail. Therefore, the CPU as the control unit confirms the data validity information or the program identifying information so that the driving signal suitable for the individual image pickup device can be used to prevent the failure of the image pickup device.

An imaging apparatus according to an aspect of the present invention, has an image pickup device for converting an optical image of a subject into electrical signals and a timing generation device for outputting a driving timing signal for the image pickup device. The timing generation device has a rewritable nonvolatile memory in which program data are stored and a timing signal generation unit to generate the driving timing signal for the image pickup device based on the program stored in the nonvolatile memory. Two or more program data including a program datum which is used as an initial value just after the power starting and a program datum which is not used as an initial value are stored in the nonvolatile memory. In the imaging apparatus, the non volatile memory includes an initial value storing area in which the initial program data are stored and which are used in the initial operations and an area which is selectively used in the following operations. Accordingly, the data (for example, the program data for the operation of the electronic viewfinder) required when starting are stored in the initial value storing area so that the required driving signal can be output at the same time as the starting of the timing generation device to allow high-speed starting. Furthermore, since the specified driving signal is output without setting, an incorrect driving signal is not input to the image pickup device to protect the image pickup device even when the power is accidentally activated.

An imaging apparatus according to an aspect of the present invention has an image pickup device for converting an optical image of a subject into electrical signals and a timing generation device for outputting a driving timing signal for the image pickup device. The timing generation device has a rewritable nonvolatile memory in which two or more different program data are stored and a timing signal generation unit to generate the driving timing signal for the image pickup device based on the program stored in the nonvolatile memory. The timing generation device further includes an initial data specifying unit which specifies initial data information selecting initial program data from the two or more different program data stored in the nonvolatile memory, and operates by the program data specified by the initial data specifying unit when starting. The timing generation device has the nonvolatile memory in which the two or more program data can be stored, and the initial program data preliminarily stored in the nonvolatile memory can be set to be used as the initial value. Thereby, advantageous effects can be achieved in that the initial operations can be modified as needed; for example, the program data loaded when starting can be used as the initial value so that the initial value is not required to be set.

The imaging apparatus according to an embodiment of the present invention is formed by a main system which controls mainly a photographing operation and a sub system which mainly controls power, the sub system starts prior to the main system and the main system is started by the sub system. When the sub system activates the power of the image pickup device and the timing generation device, operations of the image pickup device and the timing generation device are started by the program data used as the initial value. The imaging apparatus performs high-speed starting as illustrated in FIGS. 12 and 13. In this system, the sub CPU as the sub system is required only to perform power control of the timing generation device and the camera head (the image pickup device and the AFE unit) to allow high-speed starting without communication units with the timing generation device. That is to say, if the driving mode to drive the image pickup device is determined when starting, only activating the power is required to allow the timing generation device to start operations by the driving mode. As mentioned above, although output of the camera head is required to be stabilized, the sub CPU starts the timing generation device and the camera head and the stabilization of the output of the camera head is completed during the preparation of the starting of the main CPU so that the initial AE control can be started soon. The signal output permission control shown in FIG.12 may be added. The signal output permission means a release of the reset signal in relation to the timing generation device. If the timing generation device according to the embodiments of the present invention is connected, the sub CPU is only required to control a universal port to obtain a desirable output from the timing generation device so that high-speed starting can be achieved.

According to embodiments of the present invention, the following advantages can be provided:

In the programmable timing generation device for driving the image pickup device by outputting the driving timing signal, the load of the program data when starting can be omitted or reduced to provide the imaging apparatus, the method for starting the imaging apparatus, the method for protecting the image pickup device, and the timing generation device for the image pickup device.

That is to say, the timing generation device is started using the preliminarily stored program data so that the timing generation device can be started without waiting for the completion of the program load when starting.

The information for the AE control can be obtained or the operation of the electronic viewfinder can be performed without loading the program data when starting so that the timing generation device can be started at high speed.

Only when the validity or the matching is confirmed, is the timing generation device started by the preliminarily stored program data so that the timing generation device can be started at high speed without the failure of the image pickup device by an incorrect driving signal

The nonvolatile memory in which the program data are stored and the volatile memory in which the program data are to be loaded are selectively used so that effective high-speed starting with a small size memory can be achieved.

The program data stored in the volatile memory can be rewritten during starting based on the nonvolatile memory so that the starting operation and the following operations can be performed at high speed.

A part of the program data in the volatile memory can be rewritten during the operations based on aother part of the program data so that effective high-speed operations can be performed.

The timing generation device is operated for the starting or frequently used operations using the preliminarily stored program data so that the timing generation device can be operated without waiting for the program to load when the starting or the frequently used operations are in use.

A part of the program data is overwritten in the same region of the volatile memory, so that the high-speed starting of the timing generation device with a small-sized memory can be achieved.

The less frequently used program data which are used for the high-speed AF control or the photographing of moving data are overwritten in the same region of the volatile memory so that the timing generation device with the small-sized memory can be operated at high speed.

The preliminarily stored program data are overwritten from the outside and the stored program data are rewritten and updated so that it is easily possible to deal with problems or accidents.

The stored program data can be easily rewritten from the external memory card or the external device by cable communication.

Only when the validity or the matching is confirmed is the timing generation device started by the stored program data so that the image pickup device can be driven without failing due to an incorrect driving signal.

The validity information or the matching identifying information is released prior to rewriting the stored program data so that a malfunction in the case where the rewriting and updating are not normally completed can be prevented.

Only when rewriting and updating of the program data are successfully completed is the validity information or the matching identifying information set so that a malfunction in the case where the rewriting or updating of the program data are completed can be prevented.

The timing generation device is started using the preliminarily stored program data so that the timing generation device can be started without waiting for the completion of the program loading when starting. Furthermore, the program data, which are used selectively as needed after starting are preliminarily stored to achieve high-speed operation immediately after starting, so that the operations performed immediately after starting can be performed at high speed.

The timing generation device is started selectively using the two or more preliminarily stored program data so that the program data used when starting can be selected to start the timing generation.

The sub system, which mainly controls the power, starts the timing generation device using preliminarily stored program data so that the timing generation device can be started prior to starting the subsequently operated main system, which mainly controls the photographing operation.

Although the preferred embodiments of the present invention have been described, it should be noted that the present invention is not limited to these embodiments, and various changes and modifications can be made to the embodiments.

## Claims

1. A timing generation device (13) to drive an image pickup device (16), comprising:
a rewritable nonvolatile memory (13a) in which at least one first program datum is preliminarily stored; and
a rewritable volatile memory (13b) in which at least one second program datum is stored,
wherein the timing generation device is configured to output a first driving timing signal based on the at least one first program datum preliminarily stored in the nonvolatile memory (13a), but not based on the at least one second program datum, to drive the image pickup device (16);
wherein timing generation device (13) is configured to output a second driving timing signal based on the at least one second program datum stored in the volatile memory (13b), but not based on the at least one first program datum, to drive the image pickup device (16); and
wherein the timing generation device (13) is configured to switch a driving mode of the image pickup device (16) and output either the first or second driving timing signal based on the switched driving mode of the image pickup device (16).

2. The timing generation device (13) according to claim 1, wherein
the at least one second program datum is written in the volatile memory (13b) while the first driving timing signal is output based on the at least one first program datum to drive the image pickup device (16).

3. The timing generation device (13) according to claim 1 or 2,
wherein the at least one first program datum includes two or more first program data; and
while the timing generation device (13) outputs the first driving timing signal based on one of the two or more first program data to drive the image pickup device (16), another one or more of the two or more first program data are rewritten in the nonvolatile memory (13a).

4. The timing generation device (13) according to claim 1, wherein
the at least one second program datum includes two or more second program data; and
while the timing generation device (13) outputs the second driving timing signal based on one of the two or more second program data to drive the image pickup device (16), another one or more of the two or more second program data are rewritten.

5. An imaging apparatus comprising:
an image pickup device (16) which converts an image of a subject into electrical signals;
the timing generation device (13) according to claim 1 which drives the image pickup device (16),
wherein the timing generation device (13) is configured to output the first driving timing signal based on the at least one first program datum preliminarily stored in the nonvolatile memory (13a) to drive the image pickup device (16) when the imaging apparatus is started;
a control device (11a) to control the imaging apparatus; and
a mode switching device (5h) to switch a driving mode of the image pickup device (16);
wherein the control device (11a) is configured to set either the first driving timing signal or the second driving timing signal based on the driving mode which is switched by the mode switching device (5h) and to allow the timing generation device (13) to output either the first driving timing signal or the second driving timing signal which is set by the control device to drive the image pickup device.

6. The imaging apparatus according to claim 5, wherein
the at least one first program datum preliminarily stored in the nonvolatile memory (13a) includes a program datum to allow the image pickup device (16) to obtain information for an exposure control by the imaging apparatus.

7. The imaging apparatus according to claim 5 or 6, wherein
the at least one first program datum preliminarily stored in the nonvolatile memory (13a) includes a program datum to allow the imaging apparatus to perform an operation of an electronic viewfinder.

8. The imaging apparatus according to claim 5, 6 or 7, further comprising:
a control device (11a) to control the imaging apparatus,
wherein the control device (11a) is configured to store data validity information to judge whether or not the at least one first program datum stored in the nonvolatile memory (13a) is valid in the timing generation device (13), to read out the data validity information stored in the timing generation device (13), and to allow the timing generation device (13) to output the first driving timing signal to drive the image pickup device (16) if it is judged that the at least one first program data is valid.

9. The imaging apparatus according to claim 5, 6 or 7, further comprising:
a control device (11a) to control the imaging apparatus,
wherein the control device (11a) is configured to store mode identifying information to identify a mode type of the at least one first program datum stored in the nonvolatile memory (13a) in the timing generation device (13), to read out the mode identifying information stored in the timing generation device (13), and to allow the timing generation device (13) to output the first driving timing signal to drive the image pickup device (16) if it is confirmed that the at least one first program data stored in the nonvolatile memory (13a) is matched to drive the image pickup device (16).

10. The imaging apparatus according to any one of claims 5 to 9,
wherein the volatile memory (13b) is used such that a part of the at least one second program datum is overwritten in an area.

11. The imaging apparatus according to any one of claims 5 to 10, further comprising:
an external interface unit (11g; 11h); and
a rewriting unit (11a) which rewrites the at least one first program datum stored in the nonvolatile memory (13a) with information obtained via the external interface unit (11g, 11h).

12. The imaging apparatus according to claim 11, wherein
the external interface unit is a memory card connector (11g) which connects to an external memory card; and
the rewriting unit (11a) is configured to rewrite the at least one first program datum stored in the nonvolatile memory (13a) based on information in the memory card obtained via the memory card connector (11g).

13. The imaging apparatus according to claim 11, wherein
the external interface unit is a communication interface unit (11h) which performs a cable communication with an external device (101); and
the rewriting unit (11a) is configured to rewrite the at least one first program datum stored in the nonvolatile memory (13a) based on information obtained via the cable communication by the communication interface unit (11h) from the external device (101).

14. The imaging apparatus according to any one of claims 5 to 13,
wherein
the at least one first program datum includes two or more different program data;
the control device (11ea) is configured to specify an initial program datum of the two or more different program data stored in the nonvolatile memory (13a); and
the control device (11a) is configured to allow the timing generation device to output the first driving timing signal based on the specified initial program datum when the imaging apparatus is started.

15. The imaging apparatus according to claim 14, wherein
the imaging apparatus is structured from a main system (11a) which controls a photographing operation and a sub system (20) which controls a power of the imaging apparatus;
the sub system (20) is started prior to a start of the main system (11a) and the sub system (20) is configured to start the main system (11a); and
the image pickup device (16) and the timing generation device (13) are started based on the initial program datum after the sub system (20) activates power of the image pickup device (16) and the timing generation device (13).

16. A method for starting an imaging apparatus having an image pickup device (16) and a timing generation device (13) including a rewritable nonvolatile memory (13a) and a rewritable volatile memory (13b), having the steps of:
storing at least one first program datum in the nonvolatile memory (13a);
receiving a staring signal of the imaging apparatus; and
outputting a first driving timing signal based on the at least one first program datum stored in the nonvolatile memory (13a) to drive the image pickup device (16);
writing at least one second program datum in the volatile memory (13b) while the timing generation device (13) outputs the first driving timing signal based on the at least one first program datum stored in the nonvolatile memory (13a);
switching a driving mode of the image pickup device (16); and
outputting either a driving timing signal based on the at least one first program datum, but not based on the at least one second program datum, or a second driving timing signal based on the at least one second program datum, but not based on the at least one first program datum, based on the switched driving mode of the image pickup device (16).

## Patentansprüche

1. Zeitverlauf-Generierungsvorrichtung (13), um eine Bildaufnahmevorrichtung (16) anzusteuern, die umfasst:
einen überschreibbaren, nicht flüchtigen Speicher (13a), in den wenigstens eine erste Programmdateneinheit im Voraus gespeichert worden ist; und
einen überschreibbaren flüchtigen Speicher (13b), in den wenigstens eine zweite Programmdateneinheit gespeichert worden ist,
wobei die Zeitverlauf-Generierungsvorrichtung konfiguriert ist, um ein erstes Ansteuerungszeitverlauf-Signal, das auf der wenigstens einen ersten Programmdateneinheit beruht, die im Voraus in den nicht flüchtigen Speicher (13a) gespeichert worden ist, nicht jedoch auf der wenigstens einen zweiten Programmdateneinheit beruht, auszugeben, um die Bildaufnahmevorrichtung (16) anzusteuern;
wobei die Zeitverlauf-Generierungsvorrichtung (13) konfiguriert ist, um ein zweites Ansteuerungszeitverlauf-Signal, das auf der wenigstens einen zweiten Programmdateneinheit beruht, die in den flüchtigen Speicher (13b) gespeichert worden ist, nicht jedoch auf der wenigstens einen ersten Programmdateneinheit beruht, auszugeben, um die Bildaufnahmevorrichtung (16) anzusteuern; und
wobei die Zeitverlauf-Generierungsvorrichtung (13) konfiguriert ist, um eine Ansteuerungsbetriebsart der Bildaufnahmevorrichtung (16) umzuschalten und um anhand der umgeschalteten Ansteuerungsbetriebsart der Bildaufnahmevorrichtung (16) entweder das erste oder das zweite Ansteuerungszeitverlauf-Signal auszugeben.

2. Zeitverlauf-Generierungsvorrichtung (13) nach Anspruch 1, wobei
die wenigstens eine zweite Programmdateneinheit in den flüchtigen Speicher (13b) geschrieben wird, während das erste Ansteuerungszeitverlauf-Signal, das auf der wenigstens einen ersten Programmdateneinheit beruht, ausgegeben wird, um die Bildaufnahmevorrichtung (16) anzusteuern.

3. Zeitverlauf-Generierungsvorrichtung (13) nach Anspruch 1 oder 2,
wobei die wenigstens eine erste Programmdateneinheit zwei oder mehr erste Programmdateneinheiten enthält; und
während die Zeitverlauf-Generierungsvorrichtung (13) das erste Ansteuerungszeitverlauf-Signal, das auf einer der zwei oder mehr ersten Programmdateneinheiten beruht, ausgibt, um die Bildaufnahmevorrichtung (16) anzusteuern, eine oder mehrere weitere der zwei oder mehr ersten Programmdateneinheiten wieder in den nicht flüchtigen Speicher (13a) geschrieben werden.

4. Zeitverlauf-Generierungsvorrichtung (13) nach Anspruch 1, wobei
die wenigstens eine zweite Programmdateneinheit zwei oder mehr zweite Programmdateneinheiten enthält; und
während die Zeitverlauf-Generierungsvorrichtung (13) das zweite Ansteuerungszeitverlauf-Signal, das auf einer der zwei oder mehr zweiten Programmdateneinheiten beruht, ausgibt, um die Bildaufnahmevorrichtung (16) anzusteuern, eine oder mehrere weitere der zwei oder mehr zweiten Programmdaten neu geschrieben werden.

5. Bilderzeugungsvorrichtung, die umfasst:
eine Bildaufnahmevorrichtung (16), die ein Bild eines Gegenstands in elektrische Signale umsetzt;
eine Zeitverlauf-Generierungsvorrichtung (13) nach Anspruch 1, die die Bildaufnahmevorrichtung (16) ansteuert,
wobei die Zeitverlauf-Generierungsvorrichtung (13) konfiguriert ist, um das erste Ansteuerungszeitverlauf-Signal, das auf der einen ersten Programmdateneinheit beruht, die im Voraus in dem nicht flüchtigen Speicher (13a) gespeichert worden ist, auszugeben, um die Bildaufnahmevorrichtung (16) anzusteuern, wenn die Bilderzeugungsvorrichtung gestartet wird;
eine Steuervorrichtung (11a), um die Bilderzeugungsvorrichtung zu steuern; und
eine Betriebsart-Umschaltvorrichtung (5h), um eine Betriebsart der Bildaufnahmevorrichtung (16) umzuschalten;
wobei die Steuervorrichtung (11a) konfiguriert ist, um anhand der Ansteuerungsbetriebsart, die durch die Betriebsart-Umschaltvorrichtung (5h) umgeschaltet wird, entweder das erste Ansteuerungszeitverlauf-Signal oder das zweite Ansteuerungszeitverlauf-Signal zu setzen und um der Zeitverlauf-Generierungsvorrichtung (13) zu erlauben, entweder das erste Ansteuerungszeitverlauf-Signal oder das zweite Ansteuerungszeitverlauf-Signal, das durch die Steuervorrichtung gesetzt worden ist, auszugeben, um die Bildaufnahmevorrichtung anzusteuern.

6. Bilderzeugungsvorrichtung nach Anspruch 5, wobei
die wenigstens eine erste Programmdateneinheit, die im Voraus in dem nicht flüchtigen Speicher (13a) gespeichert worden ist, eine Programmdateneinheit enthält, um der Bildaufnahmevorrichtung (16) zu erlauben, Informationen für eine Belichtungssteuerung durch die Bilderzeugungsvorrichtung zu erhalten.

7. Bilderzeugungsvorrichtung nach Anspruch 5 oder 6, wobei
die wenigstens eine erste Programmdateneinheit, die im Voraus in dem nicht flüchtigen Speicher (13a) gespeichert worden ist, eine Programmdateneinheit enthält, um der Bilderzeugungsvorrichtung (16) zu erlauben, eine Operation eines elektronischen Suchers auszuführen.

8. Bilderzeugungsvorrichtung nach Anspruch 5, 6 oder 7, die ferner umfasst:
eine Steuervorrichtung (11a), um die Bilderzeugungsvorrichtung zu steuern,
wobei die Steuervorrichtung (11a) konfiguriert ist, um Datengültigkeitsinformationen, um zu beurteilen, ob die wenigstens eine erste Programmdateneinheit, die in dem nicht flüchtigen Speicher (13a) gespeichert worden ist, gültig ist, in der Zeitverlauf-Generierungsvorrichtung (13) zu speichern, um die in der Zeitverlauf-Generierungsvorrichtung (13) gespeicherten Datengültigkeitsinformationen auszulesen, und um der Zeitverlauf-Generierungsvorrichtung (13) zu ermöglichen, das erste Ansteuerungszeitverlauf-Signal auszugeben, um die Bildaufnahmevorrichtung (16) anzusteuern, falls geurteilt wird, dass die wenigstens einen ersten Programmdateneinheiten gültig sind.

9. Bilderzeugungsvorrichtung nach Anspruch 5, 6 oder 7, die ferner umfasst:
eine Steuervorrichtung (11a), um die Bilderzeugungsvorrichtung zu steuern,
wobei die Steuervorrichtung (11a) konfiguriert ist, um Betriebsartidentifizierungsinformationen, um einen Betriebsarttyp der wenigstens einen ersten Programmdateneinheit, die in dem nicht flüchtigen Speicher (13a) gespeichert worden ist, zu identifizieren, in der Zeitverlauf-Generierungsvorrichtung (13) zu speichern, um die in der Zeitverlauf-Generierungsvorrichtung (13) gespeicherten Betriebsart-Identifizierungsinformationen auszulesen und um der Zeitverlauf-Generierungsvorrichtung (13) zu ermöglichen, das erste Ansteuerungszeitverlauf-Signal auszugeben, um die Bildaufnahmevorrichtung (16) anzusteuern, falls bestätigt wird, dass die wenigstens einen ersten Programmdateneinheiten, die in dem nicht flüchtigen Speicher (13a) gespeichert worden sind, geeignet sind, um die Bildaufnahmevorrichtung (16) anzusteuern.

10. Bilderzeugungsvorrichtung nach einem der Ansprüche 5 bis 9, wobei der flüchtige Speicher (13b) in der Weise verwendet wird, dass ein Teil der wenigstens einen zweiten Programmdateneinheit in einem Bereich überschrieben wird.

11. Bilderzeugungsvorrichtung nach einem der Ansprüche 5 bis 10, die ferner umfasst:
eine externe Schnittstelleneinheit (11g; 11h); und
eine Überschreibeinheit (11a), um die in dem nicht flüchtigen Speicher (13a) gespeicherte erste Programmdateneinheit mit Informationen zu überschreiben, die über die externe Schnittstelleneinheit (11g, 11h) erhalten werden.

12. Bilderzeugungsvorrichtung nach Anspruch 11, wobei
die externe Schnittstelleneinheit ein Speicherkarten-Verbinder (11g) ist, der mit einer externen Speicherkarte eine Verbindung herstellt; und
die Überschreibeinheit (11a) konfiguriert ist, um die in dem nicht flüchtigen Speicher (13a) gespeicherte erste Programmdateneinheit anhand von Informationen in der Speicherkarte, die über den Speicherkarten-Verbinder (11g) erhalten werden, zu überschreiben.

13. Bilderzeugungsvorrichtung nach Anspruch 11, wobei
die externe Schnittstelleneinheit eine Kommunikationsschnittstelleneinheit (11h) ist, die eine Kabelkommunikation mit einer externen Vorrichtung (101) ausführt; und
die Überschreibeinheit (11a) konfiguriert ist, um die in dem nicht flüchtigen Speicher (13a) gespeicherte wenigstens eine erste Programmdateneinheit anhand von Informationen, die über die Kabelkommunikation durch die Kommunikationsschnittstelleneinheit (11h) von der externen Vorrichtung (101) erhalten werden, zu überschreiben.

14. Bilderzeugungsvorrichtung nach einem der Ansprüche 5 bis 13, wobei
die wenigstens eine erste Programmdateneinheit zwei oder mehr verschiedene Programmdateneinheiten enthält;
die Steuervorrichtung (11a) konfiguriert ist, um eine anfängliche Programmdateneinheit der zwei oder mehr verschiedenen Programmdateneinheiten, die in dem nicht flüchtigen Speicher (13a) gespeichert worden sind, zu spezifizieren; und
die Steuervorrichtung (11a) konfiguriert ist, um anhand der spezifizierten anfänglichen Programmdateneinheit der Zeitverlauf-Generierungsvorrichtung zu erlauben, das erste Ansteuerungszeitverlauf-Signal auszugeben, wenn die Bilderzeugungsvorrichtung gestartet wird.

15. Bilderzeugungsvorrichtung nach Anspruch 14, wobei
die Bilderzeugungsvorrichtung aus einem Hauptsystem (11a), das eine Photographieoperation steuert, und aus einem Untersystem (20), das eine Leistung der Bilderzeugungsvorrichtung steuert, aufgebaut ist;
das Untersystem (20) gestartet wird, bevor das Hauptsystem (11a) gestartet wird, und das Untersystem (20) konfiguriert ist, um das Hauptsystem (11a) zu starten; und
die Bildaufnahmevorrichtung (16) und die Zeitverlauf-Generierungsvorrichtung (13) anhand der anfänglichen Programmdateneinheit gestartet werden, nachdem das Untersystem (20) Leistung der Bildaufnahmevorrichtung (16) und der Zeitverlauf-Generierungsvorrichtung (13) aktiviert hat.

16. Verfahren zum Starten einer Bilderzeugungsvorrichtung, die eine Bildaufnahmevorrichtung (16) und eine Zeitverlauf-Generierungsvorrichtung (13) einschließlich eines überschreibbaren nicht flüchtigen Speichers (13a) und eines überschreibbaren flüchtigen Speichers (13b) umfasst, das die folgenden Schritte umfasst:
Speichern wenigstens einer ersten Programmdateneinheit in dem nicht flüchtigen Speicher (13a);
Empfangen eines Startsignals der Bilderzeugungsvorrichtung; und
Ausgeben eines ersten Ansteuerungszeitverlauf-Signals, das auf der wenigstens einen ersten Programmdateneinheit beruht, die in dem nicht flüchtigen Speicher (13a) gespeichert worden ist, um die Bildaufnahmevorrichtung (16) anzusteuern;
Schreiben wenigstens einer zweiten Programmdateneinheit in den flüchtigen Speicher (13b), während die Zeitverlauf-Generierungsvorrichtung (13) das erste Ansteuerungszeitverlauf-Signal, das auf der in dem nicht flüchtigen Speicher (13a) gespeicherten wenigstens einen ersten Programmdateneinheit beruht, ausgibt;
Umschalten einer Ansteuerungsbetriebsart der Bildaufnahmevorrichtung (16); und
Ausgeben entweder eines Ansteuerungszeitverlauf-Signals, das auf der wenigstens einen ersten Programmdateneinheit beruht, nicht jedoch auf der wenigstens einen zweiten Programmdateneinheit beruht, oder eines zweiten Ansteuerungszeitverlauf-Signals, das auf der wenigstens einem zweiten Programmdateneinheit beruht, nicht jedoch auf der wenigstens einen ersten Programmdateneinheit beruht, anhand der umgeschalteten Ansteuerungsbetriebsart der Bildaufnahmevorrichtung (16).

## Revendications

1. Dispositif (13) générateur de cadencement destiné à piloter un dispositif (16) d'acquisition d'image, comprenant :
une mémoire non volatile réinscriptible (13a) dans laquelle est mémorisée de manière préliminaire au moins une première donnée de programme ; et
une mémoire volatile réinscriptible (13b) dans laquelle est mémorisée au moins une seconde donnée de programme,
dans lequel le dispositif générateur de cadencement est constitué pour sortir, pour piloter le dispositif (16) d'acquisition d'image, un premier signal de cadencement de pilotage basé sur l'au moins une première donnée de programme mémorisée de manière préliminaire dans la mémoire non volatile (13a), mais non basé sur l'au moins une seconde donnée de programme ;
dans lequel le dispositif (13) générateur de cadencement est constitué pour sortir, pour piloter le dispositif (16) d'acquisition d'image, un second signal de cadencement de pilotage basé sur l'au moins une seconde donnée de programme mémorisée dans la mémoire volatile (13b), mais non basé sur l'au moins une première donnée de programme ; et
dans lequel le dispositif (13) générateur de cadencement est constitué pour changer le mode de pilotage du dispositif (16) d'acquisition d'image et pour sortir soit le premier soit le second signal de cadencement de pilotage en se basant sur le mode de pilotage qui a été changé du dispositif (16) d'acquisition d'image.

2. Dispositif (13) générateur de cadencement selon la revendication 1, dans lequel l'au moins une seconde donnée de programme est écrite dans la mémoire volatile (13b) pendant que le premier signal de cadencement de pilotage est sorti en se basant sur l'au moins une première donnée de programme pour piloter le dispositif (16) d'acquisition d'image.

3. Dispositif (13) générateur de cadencement selon la revendication 1 ou 2,
dans lequel l'au moins une première donnée de programme inclut deux, ou plus, premières données de programme ; et
dans lequel, pendant que le dispositif (13) générateur de cadencement sort le premier signal de cadencement de pilotage en se basant sur l'une des deux, ou plus, premières données de programme pour piloter le dispositif (16) d'acquisition d'image, une autre ou plusieurs autres des deux, ou plus, premières données de programme sont réécrites dans la mémoire non volatile (13a).

4. Dispositif (13) générateur de cadencement selon la revendication 1,
dans lequel l'au moins une seconde donnée de programme inclut deux, ou plus, secondes données de programme ; et
dans lequel, pendant que le dispositif (13) générateur de cadencement sort le second signal de cadencement de pilotage en se basant sur l'une des deux, ou plus, secondes données de programme pour piloter le dispositif (16) d'acquisition d'image, une autre ou plusieurs autres des deux, ou plus, secondes données de programme sont réécrites.

5. Appareil d'imagerie comprenant :
un dispositif (16) d'acquisition d'image qui convertit une image d'un objet en signaux électriques ;
un dispositif (13) générateur de cadencement selon la revendication 1 qui pilote le dispositif (16) d'acquisition d'image,
dans lequel le dispositif (13) générateur de cadencement est constitué pour sortir, pour piloter le dispositif (16) d'acquisition d'image, le premier signal de cadencement de pilotage en se basant sur l'au moins une première donnée de programme mémorisée de manière préliminaire dans la mémoire non volatile (13a), lorsque l'on démarre l'appareil d'imagerie ;
un dispositif (11a) de commande destiné à commander l'appareil d'imagerie ; et
un dispositif (5h) de changement de mode destiné à changer le mode de pilotage du dispositif (16) d'acquisition d'image ;
dans lequel le dispositif (11a) de commande est constitué pour fixer soit le premier signal de cadencement de pilotage soit le second signal de cadencement de pilotage en se basant sur le mode de pilotage qui a été changé par le dispositif (5h) de changement de mode et pour permettre au dispositif (13) générateur de cadencement de sortir, pour piloter le dispositif d'acquisition d'image, soit le premier signal de cadencement de pilotage soit le second signal de cadencement de pilotage qui a été fixé par le dispositif de commande.

6. Appareil d'imagerie selon la revendication 5, dans lequel l'au moins une première donnée de programme mémorisée de manière préliminaire dans la mémoire non volatile (13a) inclut une donnée de programme destinée à permettre au dispositif (16) d'acquisition d'image d'obtenir de l'information pour une commande d'exposition par l'appareil d'imagerie.

7. Appareil d'imagerie selon la revendication 5 ou 6, dans lequel l'au moins une première donnée de programme mémorisée de manière préliminaire dans la mémoire non volatile (13a) inclut une donnée de programme destinée à permettre à l'appareil d'imagerie d'effectuer la mise en oeuvre d'un viseur électronique.

8. Appareil d'imagerie selon la revendication 5, 6 ou 7, comprenant en outre :
un dispositif (11a) de commande destiné à commander l'appareil d'imagerie,
dans lequel le dispositif (11a) de commande est constitué de façon à mémoriser de l'information de validité de données pour juger si l'au moins une première donnée de programme mémorisée dans la mémoire non volatile (13a) du dispositif (13) générateur de cadencement est, ou non, valide, à lire l'information de validité de données mémorisée dans le dispositif (13) générateur de cadencement, et à permettre au dispositif (13) générateur de cadencement de sortir le premier signal de cadencement de pilotage pour piloter le dispositif (16) d'acquisition d'image s'il est jugé que l'au moins une première donnée de programme est valide.

9. Appareil d'imagerie selon la revendication 5, 6 ou 7, comprenant en outre :
un dispositif (11a) de commande destiné à commander l'appareil d'imagerie,
dans lequel le dispositif (11a) de commande est constitué de façon à mémoriser de l'information d'identification de mode pour identifier un type de mode de l'au moins une première donnée de programme mémorisée dans la mémoire non volatile (13a) du dispositif (13) générateur de cadencement, à lire l'information d'identification de mode mémorisée dans le dispositif (13) générateur de cadencement, et à permettre au dispositif (13) générateur de cadencement de sortir le premier signal de cadencement de pilotage pour piloter le dispositif (16) d'acquisition d'image s'il est vérifié que l'au moins une première donnée de programme mémorisée dans la mémoire non volatile (13a) est adaptée au dispositif (16) d'acquisition d'image.

10. Appareil d'imagerie selon l'une quelconque des revendications 5 à 9, dans lequel la mémoire volatile (13b) est utilisée de telle façon qu'au moins une partie de l'au moins une seconde donnée de programme est écrasée par réécriture.

11. Appareil d'imagerie selon l'une quelconque des revendications 5 à 10, comprenant en outre :
une unité (11g ; 11h) d'interface externe ; et
une unité (11a) de réécriture qui réécrit l'au moins une première donnée de programme mémorisée dans la mémoire non volatile (13a) avec de l'information obtenue via l'unité (11g, 11h) d'interface externe.

12. Appareil d'imagerie selon la revendication 11,
dans lequel l'unité d'interface externe est un connecteur (11g) pour carte de mémoire qui se connecte à une carte de mémoire externe ; et
dans lequel l'unité (11a) de réécriture est constituée pour réécrire l'au moins une première donnée de programme mémorisée dans la mémoire non volatile (13a) en se basant sur de l'information de la carte de mémoire obtenue via le connecteur (11g) pour carte de mémoire.

13. Appareil d'imagerie selon la revendication 11,
dans lequel l'unité d'interface externe est une unité (11h) d'interface de communication qui effectue une communication par câble avec un dispositif externe (101) ; et
dans lequel l'unité (11a) de réécriture est constituée pour réécrire l'au moins une première donnée de programme mémorisée dans la mémoire non volatile (13a) en se basant sur de l'information obtenue, du dispositif externe (101), par l'unité (11h) d'interface de communication via le câble de communication.

14. Appareil d'imagerie selon l'une quelconque des revendications 5 à 13,
dans lequel l'au moins une première donnée de programme inclut deux, ou plus, données de programme différentes ;
dans lequel le dispositif (11a) de commande est constitué pour spécifier une donnée initiale de programme des deux, ou plus, données de programme différentes mémorisées dans la mémoire non volatile (13a) ; et
dans lequel le dispositif (11a) de commande est constitué pour permettre au dispositif générateur de cadencement de sortir le premier signal de cadencement de pilotage basé sur la donnée initiale de programme spécifiée lorsque l'on démarre l'appareil d'imagerie.

15. Appareil d'imagerie selon la revendication 14,
dans lequel l'appareil d'imagerie est structuré à partir d'un système principal (11a) qui commande une opération de photographie et d'un sous-système (20) qui commande l'alimentation en énergie de l'appareil d'imagerie ;
dans lequel le sous-système (20) est démarré avant de démarrer le système principal (11a) et le sous-système (20) est constitué pour démarrer le système principal (11a) ; et
dans lequel le dispositif (16) d'acquisition d'image et le dispositif (13) générateur de cadencement sont démarrés en se basant sur la donnée initiale de programme après que le sous-système (20) a activé l'alimentation en énergie du dispositif (16) d'acquisition d'image et du dispositif (13) générateur de cadencement.

16. Procédé de démarrage d'un appareil d'imagerie comportant un dispositif (16) d'acquisition d'image et un dispositif (13) générateur de cadencement incluant une mémoire non volatile réinscriptible (13a) et une mémoire volatile réinscriptible (13b), comportant les étapes :
de mémorisation d'au moins une première donnée de programme dans la mémoire non volatile (13a) ;
de réception d'un signal de démarrage de l'appareil d'imagerie ; et
de sortie, pour piloter le dispositif (16) d'acquisition d'image, d'un premier signal de cadencement de pilotage basé sur l'au moins une première donnée de programme mémorisée dans la mémoire non volatile (13a) ;
d'écriture d'au moins une seconde donnée de programme dans la mémoire volatile (13b) pendant que le dispositif (13) générateur de cadencement sort le premier signal de cadencement de pilotage basé sur l'au moins une première donnée de programme mémorisée dans la mémoire non volatile (13a) ;
de changement du mode de pilotage du dispositif (16) d'acquisition d'image ; et
de sortie, en se basant sur le mode de pilotage du dispositif (16) d'acquisition d'image qui a été changé, soit d'un signal de cadencement de pilotage basé sur l'au moins une première donnée de programme, mais non basé sur l'au moins une seconde donnée de programme, soit d'un second signal de cadencement de pilotage basé sur l'au moins une seconde donnée de programme, mais non basé sur l'au moins une première donnée de programme.
